# EUROPEAN PATENT APPLICATION

(11) **EP 4 661 408 A1**
(43) Date of publication of application: **10.12.2025**
(21) Application number: 24880865.1
(22) Date of filing: 10.01.2024
(51) Int. Cl.: H04N 21/431

(54) **VIDEO CREATION METHOD AND ELECTRONIC DEVICE**

(30) Priority: 27.10.2023 CN 202311418278
(71) Applicant: Honor Device Co., Ltd., Shenzhen, Guangdong 518040 (CN)
(72) Inventor: YI, Jie, Shenzhen, Guangdong 518040 (CN); WANG, Di, Shenzhen, Guangdong 518040 (CN)
(74) Representative: Goddar, Heinz J.
(86) International application number: PCT/CN2024/071660
(87) International publication number: WO 2025/086477

(57) **Abstract**

This application provides a video production method and an electronic device, and relates to the field of terminal technologies. The electronic device displays a dialog page of a voice assistant application. In response to a user operation of tapping a video generation control by a user, the electronic device generates a first video, and displays a preview prompt window of the first video in the dialog page. After displaying the preview prompt window of the first video, the electronic device displays a video add card in the dialog page. If receiving a user operation of the user on the first control, the electronic device displays a text edit window in the dialog page. The electronic device obtains text content in the text edit window, and further generates a second video based on the text content and the first video, and displays a preview prompt window of the second video in the dialog page. In this way, the voice assistant application of the electronic device can guide the user to complete video production step by step, to reduce operation difficulty of the user.

## Description

This application claims priority to Chinese Patent Application No. 202311418278.6, filed with the China National Intellectual Property Administration on October 27, 2023 and entitled " LARGE MODEL BASED VIDEO PRODUCTION METHOD AND ELECTRONIC DEVICE", which is incorporated herein by reference in its entirety.

### TECHNICAL FIELD

Embodiments of this application relate to the field of terminal technologies, and in particular, to a video production method and an electronic device.

### BACKGROUND

An electronic device usually has a shooting function, to meet a shooting requirement of a user. The user may shoot images by using the electronic device, to record life by using the images obtained through shooting. To provide a better service for the user, the electronic device may further provide a video production function by using video production software. For example, the video production software may synthesize images selected by the user into a video.

However, a video production process provided by the electronic device is relatively complex at present, and user experience is relatively poor.

### SUMMARY

This application provides a video production method and an electronic device, to simplify a video production process, thereby improving user experience.

To achieve the foregoing objective, embodiments of this application use the following technical solutions.

According to a first aspect, a video production method is provided. The method includes: displaying a dialog page of a voice assistant application, where the dialog page includes a video generation prompt box, the prompt box includes at least one image set item and a video generation control, the at least one image set item is used to provide at least one image, and the video generation control is used to generate a video; in response to a user operation of a user on the video generation control, generating a first video based on the at least one image, and displaying a preview prompt window of the first video in the dialog page of the voice assistant application; further displaying a video add card in the dialog page after the preview prompt window of the first video is displayed, where the video add card includes a first control; if a user operation of the user on the first control is received, displaying a text edit window in the dialog page in response to the user operation of the user on the first control; and obtaining text content in the text edit window, and further generating a second video based on the text content and the first video, and displaying a preview prompt window of the second video in the dialog page.

In this way, the voice assistant of the electronic device can provide a video production guidance service by using the dialog page, to guide the user to complete video production step by step. Even for a user who has no experience in video production, the user can still complete video production by using the voice assistant, so that operation difficulty of the user is reduced. In addition, the user may add text content to the manufactured video, so that the manufactured video meets a user requirement, to improve user experience.

In a possible implementation of the first aspect, the text edit window includes a recommendation, and the recommendation is generated based on a video theme of the first video. In this way, the electronic device can actively provide the user with the text content added to the video, to save time for the user to enter the text content in the text edit window.

In another possible implementation of the first aspect, the text edit window further includes a change option, and the electronic device updates the recommendation in the text edit window in response to a user operation of the user on the change option. In this way, the user can select a satisfactory recommendation in the text edit window, to improve user experience.

In another possible implementation of the first aspect, the electronic device changes the recommendation in response to an edit operation of the user on the recommendation in the text edit window, to obtain changed text content, and further obtain changed text content in the text edit window. In this way, when the user is not satisfied with the recommendation in the text edit window, the user may further enter, through an edit operation, the text content added to the video, so that user experience is further improved.

In another possible implementation of the first aspect, the electronic device further provides a production template for video production. When generating the second video based on the text content and the first video, the electronic device obtains a first production template, where the first production template is used to provide a display style of a video; further synthesizes the first production template and the text content, to generate a third video, where the third video includes the text content; and then synthesizes the third video and the first video, to generate the second video. In this way, a video of a specific display style can be provided for the user.

In another possible implementation of the first aspect, the video add card further includes a second control. If a user operation of the user on the second control is received, an audio input window is displayed in the dialog page in response to the user operation of the user on the second control, where the audio input window is used to provide a recording function, and the audio input window includes a recording function key. Audio content is obtained in response to a user operation of the user on the recording function key, a fourth video is further generated based on the audio content and the first video, and a preview prompt window of the fourth video is displayed in the dialog page.

In this way, the voice assistant of the electronic device further provides an audio content adding manner, and the user can add audio content to the manufactured video, so that the manufactured video meets a user requirement, to improve user experience.

In another possible implementation of the first aspect, the audio input window further includes a text conversion area, and the text conversion area is used to provide text corresponding to the audio content. In this way, the video manufactured by the electronic device not only includes the audio content, but also includes the text corresponding to the audio content.

In another possible implementation of the first aspect, the electronic device changes the text corresponding to the audio content in response to an edit operation of the user on the text corresponding to the audio content, to obtain text corresponding to changed audio content. In this way, when the user is not satisfied with the text corresponding to the audio content, the user may further enter the text corresponding to the audio content through an edit operation, so that user experience is further improved.

In another possible implementation of the first aspect, the electronic device obtains a second production template, and synthesizes the audio content and the second production template, to generate a fifth video, where the fifth video includes the audio content and the text corresponding to the audio content. The electronic device further synthesizes the fifth video and the first video, to generate the fourth video. In this way, a video of a specific display style can be provided for the user.

In another possible implementation of the first aspect, the video add card further includes a third control. If a user operation of the user on the third control is received, a video shooting window is displayed in response to the user operation of the user on the third control, where the video shooting window is used to provide a video shooting function, and the video shooting window includes a shooting function key. Video content is obtained in response to a user operation of the user on the shooting function key, a sixth video is further generated based on the video content and the first video, and a preview prompt window of the sixth video is displayed in the dialog page.

In this way, the voice assistant of the electronic device further provides a video content adding manner, and the user can add video content to the manufactured video, so that the manufactured video meets a user requirement, to improve user experience.

In another possible implementation of the first aspect, the video content includes text corresponding to video data. The electronic device records the video content in response to the user operation of the user on the shooting function key. The electronic device displays a video preview page of the video content after the video content is shot, where the video preview page includes a completion function key. The electronic device obtains the video content in response to a user operation of the user on the completion function key.

In this way, the sixth video provided by the electronic device for the user not only provides collected video data, but also includes text corresponding to the video data, so that user experience is improved.

In another possible implementation of the first aspect, the electronic device records at least one reminder event, where the reminder event includes an event date and an event theme. A video production recommendation card is provided in a desktop interface within preset duration before the event date of the reminder event, where the recommendation card is used to provide a quick entry to the dialog page. In this way, when predicting that the user has a video production requirement, the electronic device may display the recommendation card in the desktop interface, and provide the user with a quick entry for a video production function of the voice assistant.

In another possible implementation of the first aspect, the reminder event is any one of a birthday event, an anniversary event, and a festival event. The electronic device may provide a video production process corresponding to a blessing event such as a birthday event, an anniversary event, or a festival event, for example, make a birthday blessing video.

In another possible implementation of the first aspect, the electronic device enters the dialog page of the voice assistant application in response to a user operation of the user on the recommendation card or a received voice instruction, where the at least one image set item is associated with the event theme, and the event theme is carried in the recommendation card or the voice instruction. In this way, the electronic device can enter the dialog page of the voice assistant application by using the recommendation card or the voice instruction, and provide convenience for the user.

According to a second aspect, this application provides an electronic device, including a memory and one or more processors. The memory stores computer program code, the computer program code includes computer instructions, and when the computer instructions are executed by the processor, the electronic device is enabled to perform the method in any one of the first aspect and the possible implementations of the first aspect.

According to a third aspect, this application provides a computer-readable storage medium, including computer instructions. When the computer instructions are run on an electronic device, the electronic device is enabled to perform the method in any one of the first aspect and the possible implementations of the first aspect.

According to a fourth aspect, this application provides a computer program product including program instructions. When the computer program product is run on a computer, the computer is enabled to perform the method in any one of the first aspect and the possible implementations of the first aspect. For example, the computer may be the foregoing electronic device.

According to a fifth aspect, this application provides a chip system, where the chip system is used in an electronic device. The chip system includes an interface circuit and a processor. The interface circuit and the processor are connected to each other through a line. The interface circuit is configured to: receive a signal from a memory, and send a signal to the processor, where the signal includes computer instructions stored in the memory. When the processor executes the computer instructions, the electronic device performs the method in any one of the first aspect and the possible implementations of the first aspect.

### BRIEF DESCRIPTION OF DRAWINGS

FIG. 1 is a diagram of a video software interface according to an embodiment of this application;
FIG. 2 is a block diagram of a hardware structure of a mobile phone 100 as an example of an electronic device according to an embodiment of this application;
FIG. 3A, FIG. 3B, FIG. 3C, FIG. 3D, FIG. 3E, and FIG. 3F are a diagram of a video production method according to an embodiment of this application;
FIG. 4A, FIG. 4B, FIG. 4C, FIG. 4D, and FIG. 4E are a diagram of entering a dialog page of a voice assistant according to an embodiment of this application;
FIG. 5A, FIG. 5B, and FIG. 5C are a diagram of a video add card provided on a dialog page according to an embodiment of this application;
FIG. 6A, FIG. 6B, FIG. 6C, and FIG. 6D are a diagram of a video production process of a text add mode according to an embodiment of this application;
FIG. 7A, FIG. 7B, FIG. 7C, FIG. 7D, and FIG. 7E are a diagram of a video production process of an audio add mode according to an embodiment of this application; and
FIG. 8A, FIG. 8B, FIG. 8C, and FIG. 8D are a diagram of a video production process of a video add mode according to an embodiment of this application.

### DESCRIPTION OF EMBODIMENTS

To provide a better service for a user, an electronic device provides a video production function. For example, third-party video production software is installed on the electronic device, where the video production software provides a video production function. The user may operate the video production software to manufacture a video.

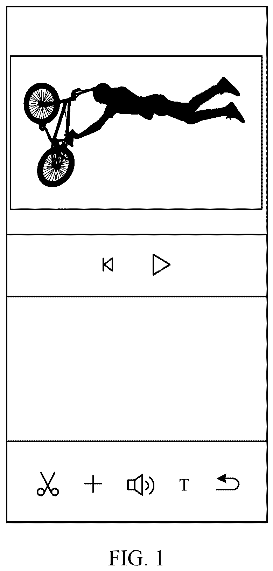

However, a video production process provided by the electronic device is relatively complex at present. For example, a plurality of function keys are disposed in an interface of the video production software shown in FIG. 1. Pattern identifiers corresponding to different function keys are different. The video production software may execute functions corresponding to the function keys based on a touch operation of the user on the function keys, for example, execute a video cropping function or a filter change function. This requires the user to learn a use manner of the video production software and the functions corresponding to the function keys. If the user does not learn the use manner of the video production software or the functions corresponding to the function keys in the video production software, it is relatively difficult for the user to operate the video production software, and the user experience is relatively poor.

In view of this, an embodiment of this application provides a quick and intelligent video production manner, so that a video production scheme in a specific scenario can be provided in a dialog manner by using a voice assistant (namely, a voice assistant application) of an electronic device. Specifically, the electronic device displays a dialog page of the voice assistant, where the dialog page includes a video generation prompt box, and the prompt box includes a video generation control. In response to a user operation of tapping the video generation control by the user, the electronic device generates a first video, and displays a preview prompt window of the first video in the dialog page of the voice assistant. After displaying the preview prompt window of the first video, the electronic device displays a video add card in the dialog page of the voice assistant. The video add card includes a control of at least one content add mode, so that the user can select from at least one content add mode of the video. Further, if receiving a user operation of tapping a control of a content add mode by the user, such as receiving a user operation of tapping a first control of a text add mode by the user, the electronic device displays a content input window corresponding to the content add mode, such as a text edit window, in the dialog page. The content input window is used to prompt the user to enter added content, so that the user can enter the added content based on a prompt. If obtaining the added content, the electronic device further generates a second video based on the added content and the first video, and displays a preview prompt window of the second video in the dialog page.

In this way, the voice assistant of the electronic device can provide a video production guidance service in a dialog manner, to guide the user to complete video production step by step. Even for a user who has no experience in video production, the user can still complete video production by using the voice assistant, so that operation difficulty of the user is reduced, thereby improving user experience.

It may be understood that the voice assistant or a voice assistant function is a function provided by an intelligent application in the electronic device. The voice assistant can recognize a voice instruction of the user, and perform an operation corresponding to the voice instruction, for example, make a voice dialog or instant questions and answers. The voice assistant can reduce reliance of a user input on an input device such as a keyboard or a mouse, and provide a more convenient interaction manner for the user.

For example, the electronic device in this embodiment of this application may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device, a media player, a wearable device, or the like. A specific form of the electronic device is not specially limited in embodiments of this application.

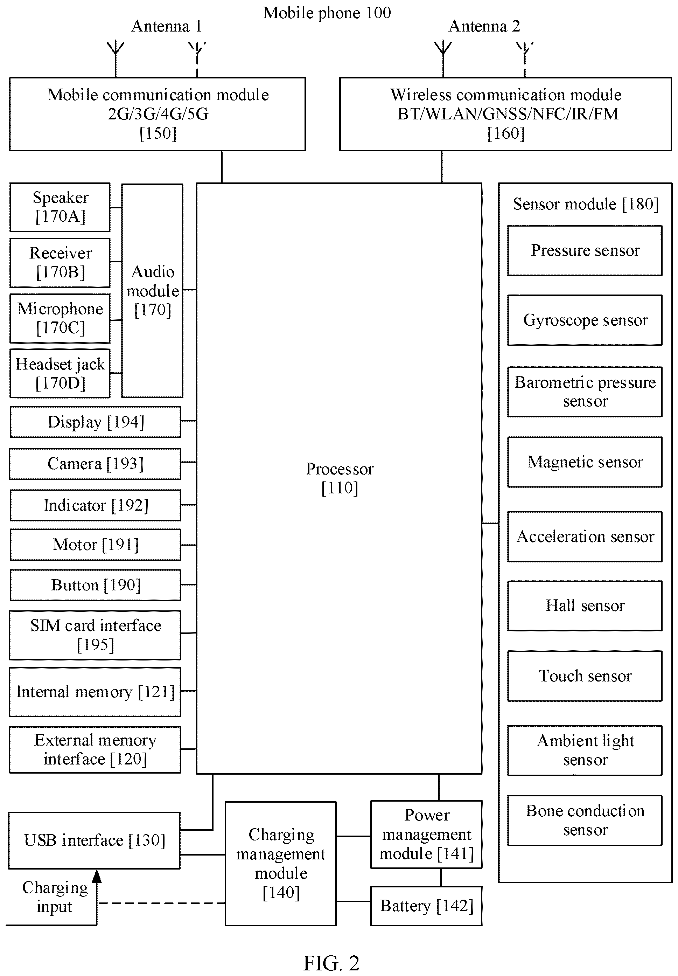

In this embodiment of this application, using an example in which the electronic device is a mobile phone 100, the hardware structure of the electronic device is described by using the mobile phone 100. As shown in FIG. 2, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), a drive sensor, and/or the like. Different processing units may be independent components, or may be integrated into one or more processors. The processor 110 may be a nerve center and a command center of the mobile phone 100. The processor 110 may generate an operation control signal based on instruction operation code and a timing signal, and complete control of instruction fetching and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor 110 may directly invoke the instructions or the data from the memory. This avoids repeated access, reduces waiting time of the processor 110, and therefore improves system efficiency.

The external memory interface 120 may be configured to connect to an external storage card, for example, a Micro SD card, to extend a storage capability of the mobile phone 100. The external storage card communicates with the processor 110 through the external memory interface 120, to implement a data storage function. For example, the mobile phone 100 may store a video manufactured by the voice assistant into the external storage card.

The internal memory 121 may be configured to store computer-executable program code. The executable program code includes instructions. The processor 110 runs the instructions stored in the internal memory 121, to perform various function applications and data processing of the mobile phone 100. For example, in this embodiment of this application, the processor 110 may execute instructions stored in the internal memory 121, where the internal memory 121 may include a program storage area and a data storage area.

The charging management module 140 is configured to receive a charging input from a charger. The charger may be a wireless charger or a wired charger. The charging management module 140 may supply power to the mobile phone 100 by using the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. In some embodiments, the power management module 141 and the charging management module 140 may alternatively be disposed in a same component.

A wireless communication function of the mobile phone 100 may be implemented through the antenna 1, the antenna 2, the mobile communication module 150, the wireless communication module 160, the modem processor, the baseband processor, and the like. In some embodiments, in the mobile phone 100, the antenna 1 is coupled to the mobile communication module 150, and the antenna 2 is coupled to the wireless communication module 160, so that the mobile phone 100 can communicate with a network and another device by using a wireless communication technology. For example, the mobile phone 100 may send the manufactured video to another electronic device by using the mobile communication module 150 or the wireless communication module 160.

The mobile phone 100 may implement an audio function, for example, music playing and recording, through the audio module 170, the speaker 170A, the receiver 170B, the microphone 170C, the headset jack 170D, the application processor, and the like.

The audio module 170 is configured to convert a digital audio signal into an analog audio signal for output, and is also configured to convert an input analog audio signal into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. For example, the mobile phone 100 may play music, audio of a video, or voice of a hands-free call by using the speaker 170A.

The receiver 170B, also referred to as an "earpiece", is configured to convert an electrical audio signal into a sound signal. When a call is answered or speech information is received through the mobile phone 100, the receiver 170B may be put close to a human ear to listen to voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the mobile phone 100. In some other embodiments, two microphones 170C may be disposed in the mobile phone 100, to collect a sound signal and implement a noise reduction function. In some other embodiments, three, four, or more microphones 170C may be alternatively disposed in the mobile phone 100, to collect a sound signal, implement noise reduction, recognize a sound source, implement a directional recording function, and the like. For example, the mobile phone may collect, by using the microphone 170C, voice data entered by the user, to manufacture a video by using the voice data.

The sensor module 180 may include a pressure sensor, a gyroscope sensor, a barometric pressure sensor, a magnetic sensor, an acceleration sensor, a Hall sensor, a touch sensor, an ambient light sensor, a bone conduction sensor, and the like. The mobile phone 100 may acquire various data by using the sensor module 180.

The mobile phone 100 implements a display function by using the GPU, the display 194, the application processor, and the like. The GPU is an image processing microprocessor and is connected to the display 194 and the application processor. The GPU is configured to perform mathematical and geometric computing for graphics rendering. The processor 110 may include one or more GPUs that execute program instructions to generate or change display information.

The display 194 is configured to display an image, a video, and the like. The display 194 may also be referred to as a screen. The display 194 includes a display panel. The display panel may use a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a MiniLED, a MicroLED, a Micro-OLED, a quantum dot light emitting diodes (quantum dot light emitting diodes, QLED), or the like. For example, the mobile phone 100 displays a dialog page of a desktop interface, a voice assistant, and the like by using the display 194.

In some implementations, the touch sensor may be disposed in the display 194. The touch sensor and a display panel form a touchscreen that is also referred to as a "touch screen". The touch sensor is also referred to as a "touch panel", configured to detect a touch operation performed on or near the touch sensor, such as a tap operation or a swipe operation. The touch sensor may transfer the detected touch operation to the application processor to determine a type of the touch event. The mobile phone 100 may provide a visual output related to the touch operation by using the display 194.

The mobile phone 100 may implement a shooting function by using the ISP, the camera 193, the video codec, the GPU, the display 194, the application processor, and the like. The ISP is configured to process data fed back by the camera 193. The camera 193 is configured to capture a static image or a video. In some embodiments, the mobile phone 100 may include one or more cameras 193. For example, the camera 193 includes a front-facing camera. The mobile phone 100 may invoke, by using the voice assistant, the camera application to open the front-facing camera, and provide, by using the front-facing camera, materials for video production.

It may be understood that, an interface connection relationship between the modules shown in this embodiment is merely an example for description, and does not constitute a structural limitation on the electronic device. In some other embodiments, the electronic device may alternatively include more or fewer modules than the foregoing embodiment, and use an interface connection manner different from that in the foregoing embodiment, or a combination of a plurality of interface connection manners. For the hardware structure of the electronic device provided in this embodiment of this application, refer to the hardware structure of the mobile phone 100. The method in the following embodiments may all be implemented in an electronic device having the foregoing hardware structure.

The method provided in this embodiment of this application may provide a video production scheme in a specific scenario, for example, provide a video production scheme in a blessing scenario such as a birthday, an anniversary, or a festival. Certainly, the method provided in this embodiment of this application may also be applied to another non-blessing scenario. The application scenario of video production is not limited in this embodiment of this application.

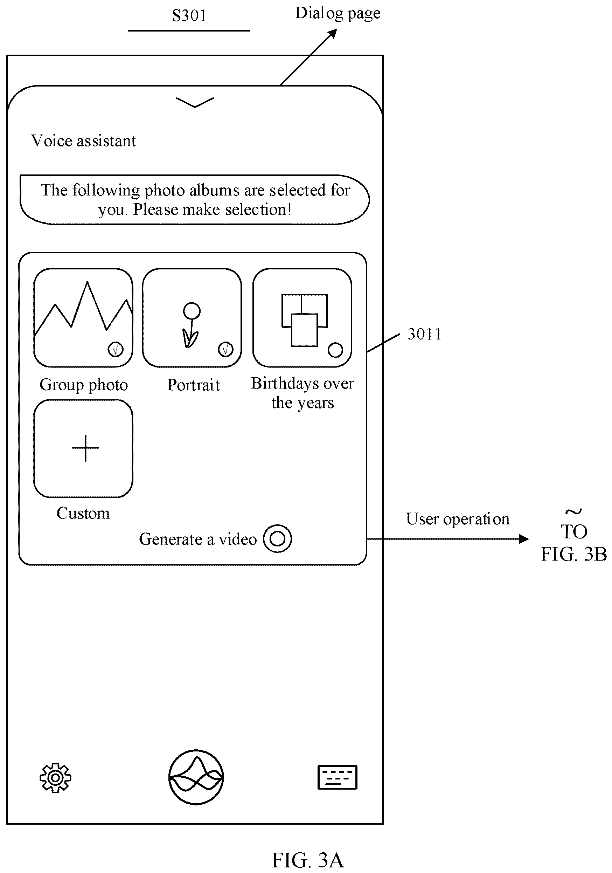

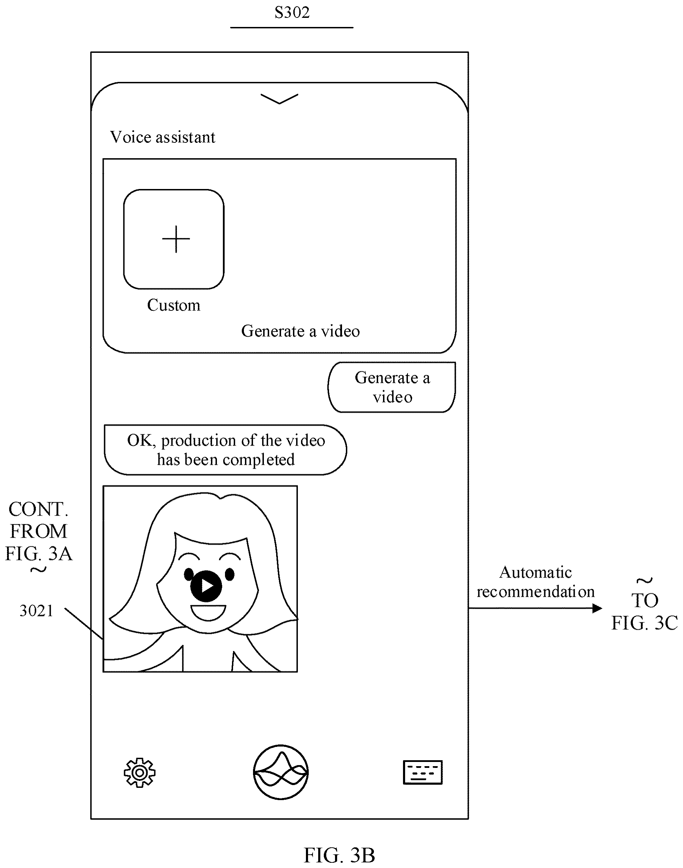

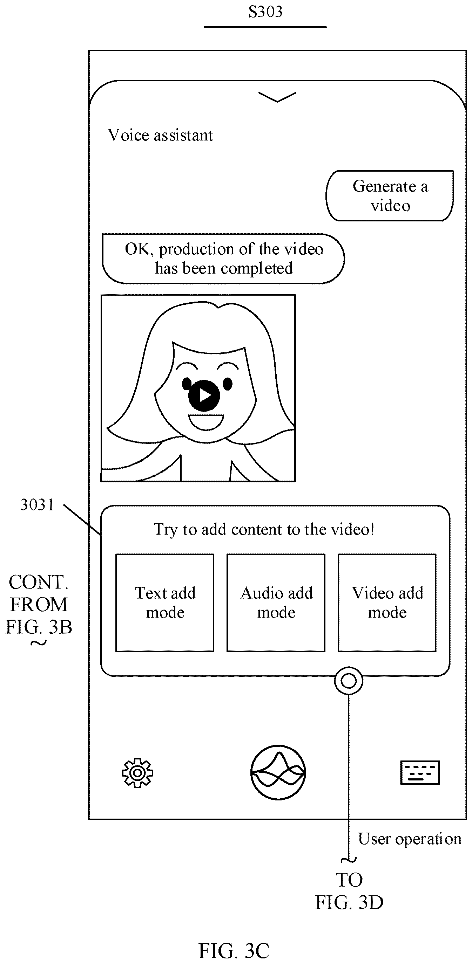

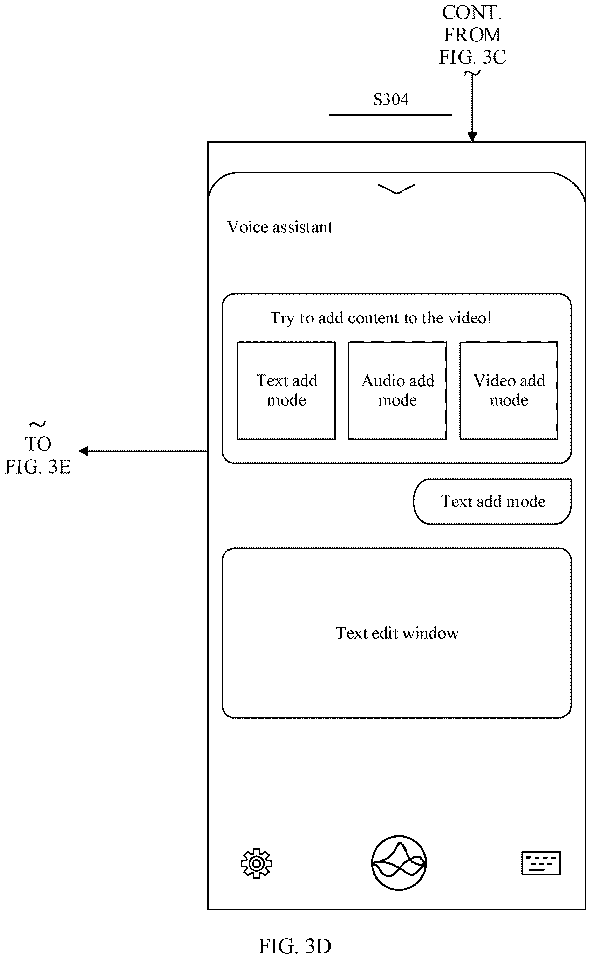

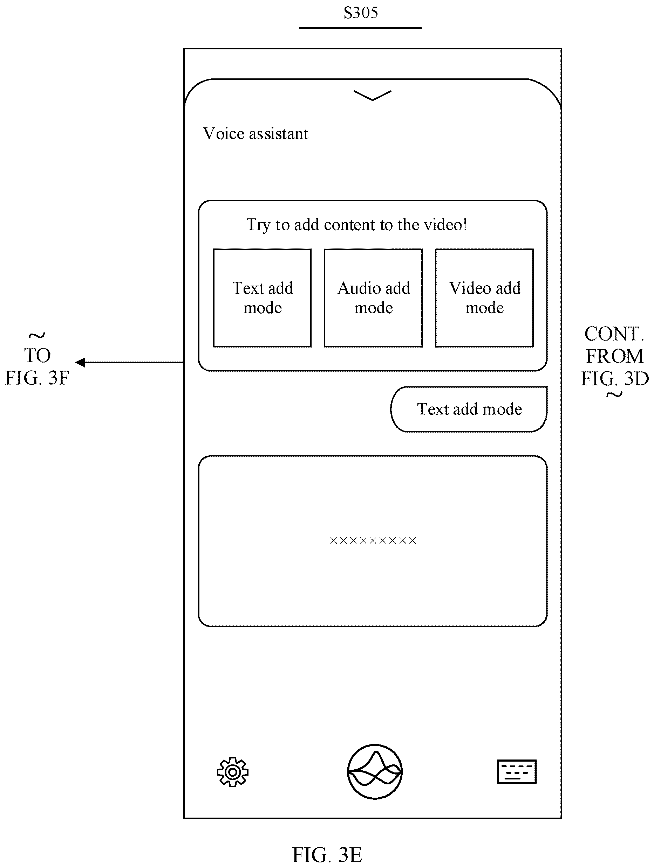

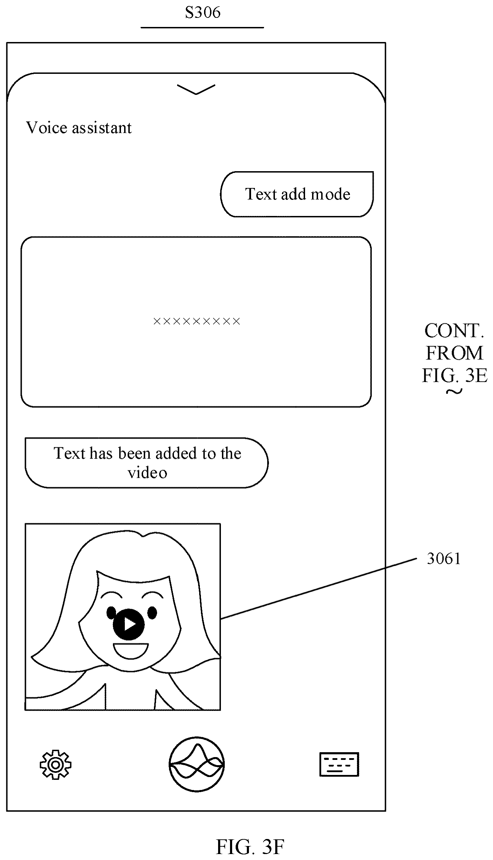

By using an example in which the electronic device is a mobile phone 100, the following describes the method provided in this embodiment of this application. As shown in FIG. 3A, FIG. 3B, FIG. 3C, FIG. 3D, FIG. 3E, and FIG. 3F, the method provided in this embodiment of this application includes the following steps.

S301: The mobile phone 100 displays a dialog page of a voice assistant.

The voice assistant is installed in the mobile phone 100. A video production function is newly added to the voice assistant. The mobile phone 100 may display the dialog page of the voice assistant in an interface, to provide video production guidance prompts in a dialog manner, thereby enabling the user to operate the mobile phone 100 to manufacture a video step by step based on the guidance prompts.

In some implementations, the mobile phone 100 enters the dialog page for video production in response to a user operation or a voice instruction. For example, a desktop interface of the mobile phone 100 includes a recommendation card for a video production function. If the mobile phone 100 receives a tap operation of the user at the recommendation card of the video production function, the mobile phone 100 enables the video production function of the voice assistant, and displays the dialog page of the voice assistant. For another example, the mobile phone 100 receives a voice instruction, such as receiving a voice instruction "generate a birthday video of Qiuqiu". In response to the voice instruction for video production, the mobile phone enables the video production function of the voice assistant, and displays the dialog page of the voice assistant.

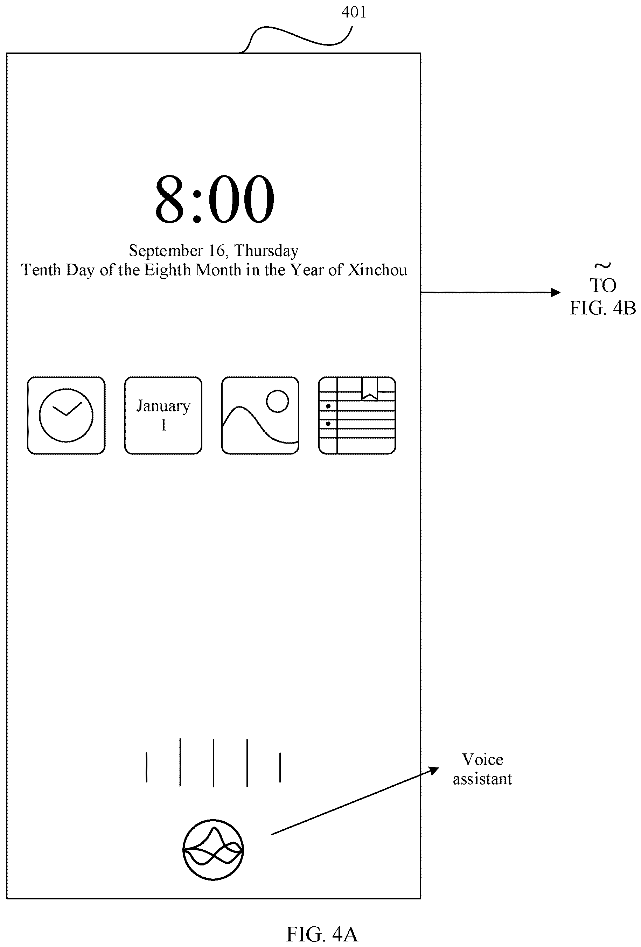

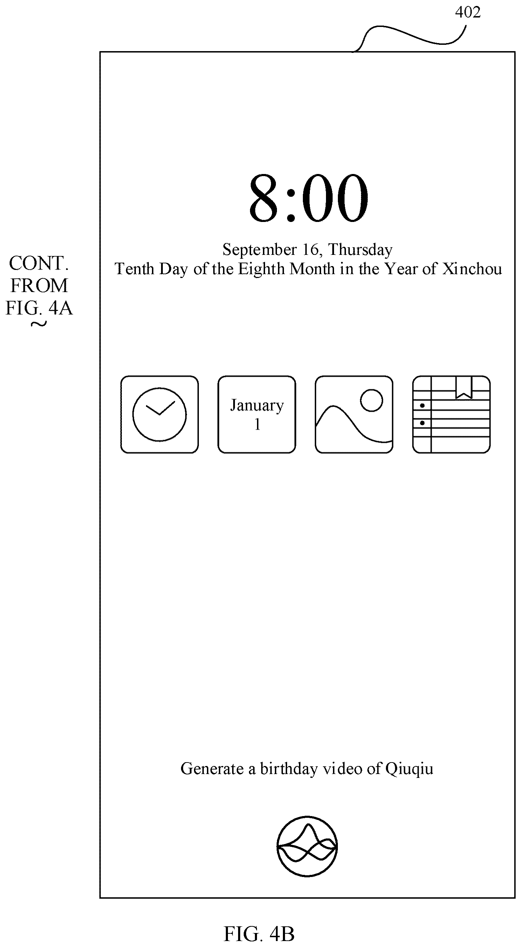

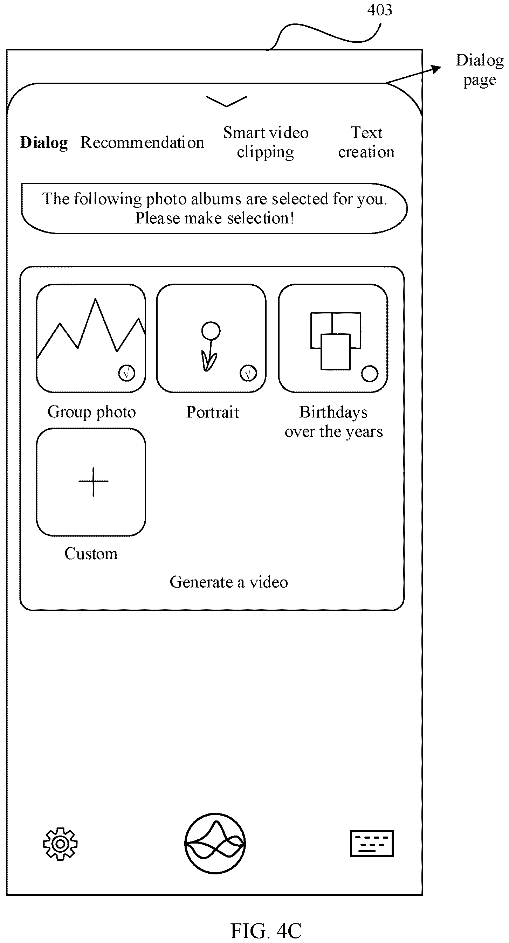

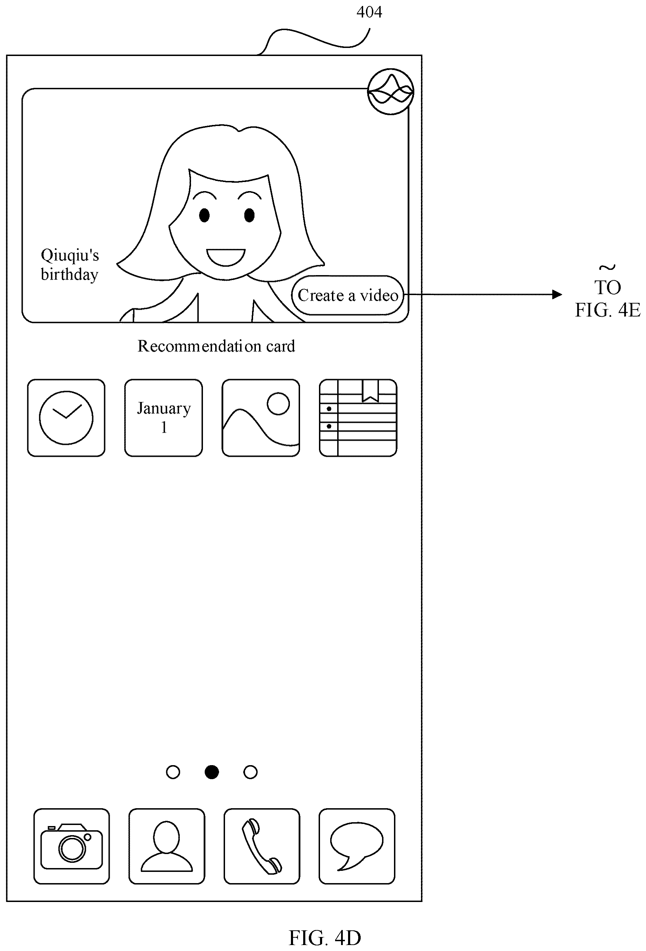

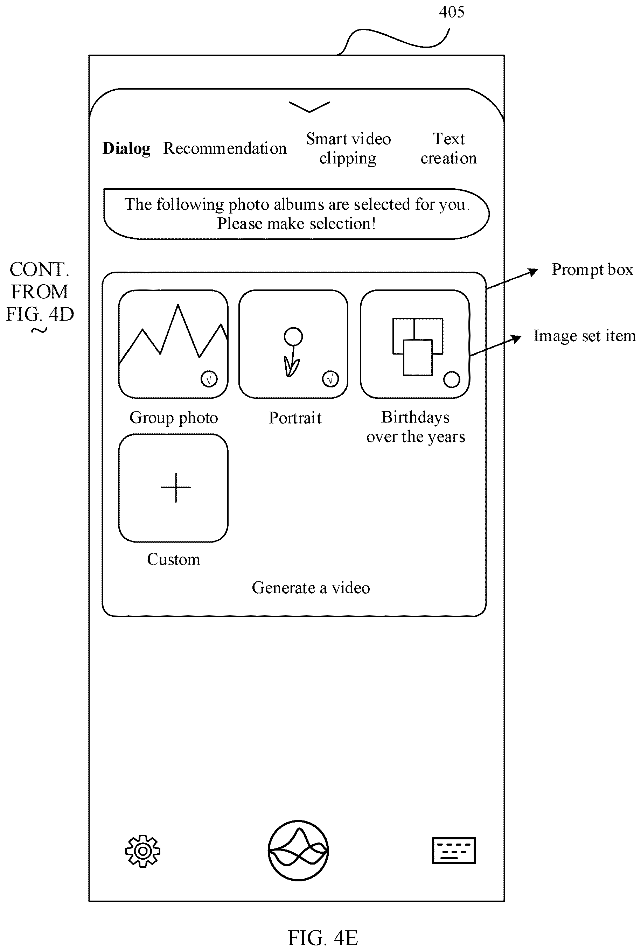

In an example, as shown in an interface 401 in FIG. 4A, FIG. 4B, FIG. 4C, FIG. 4D, and FIG. 4E, the voice assistant function is enabled when the mobile phone 100 displays the desktop. An icon of the voice assistant is displayed at the bottom of the desktop. When the voice assistant is enabled, the mobile phone 100 collects voice instructions by using a microphone. As shown in an interface 402 in FIG. 4A, FIG. 4B, FIG. 4C, FIG. 4D, and FIG. 4E, the mobile phone 100 collects the voice instruction "generate a birthday video of Qiuqiu", and displays a text prompt "generate a birthday video of Qiuqiu" above the icon of the voice assistant. As shown in an interface 403 in FIG. 4A, FIG. 4B, FIG. 4C, FIG. 4D, and FIG. 4E, the mobile phone 100 enters the dialog page of the voice assistant in response to the voice instruction "generate a birthday video of Qiuqiu".

The dialog page of the voice assistant may provide an interface for real-time interaction between the mobile phone 100 and the user. In response to a user operation or a voice instruction, the mobile phone 100 may display, in the dialog page, a message for informing the user. The mobile phone 100 may also display, in the dialog page, a message entered by the user or text corresponding to the voice instruction. The message displayed by the mobile phone 100 may include text, an image, a link, a control, or the like. Messages displayed in the dialog page are arranged in chronological order, where later messages are arranged below earlier messages. For example, in 403 of FIG. 4A, FIG. 4B, FIG. 4C, FIG. 4D, and FIG. 4E, a display interface of the mobile phone 100 includes a dialog page, and the dialog page displays a text message "The following photo albums are selected for you. Please make selection!" Icons of a plurality of image sets are also displayed below the text message, for example, a "group photo" icon, a "portrait" icon, a "birthdays over the years" icon, and the like. If there is a relatively large amount of dialog content in the dialog page, the mobile phone 100 may swipe the dialog page under the control the user, to display previous messages.

It may be understood that, the voice assistant may provide a plurality of functions for the user, including the video production function provided in this embodiment of this application. Display interfaces of different functions of the voice assistant may be different. As shown in 403 in FIG. 4A, FIG. 4B, FIG. 4C, FIG. 4D, and FIG. 4E, the interface of the voice assistant may also include functions such as "recommend", "smart video clipping", and "text creation". After the voice assistant receives a leftward or rightward swipe operation or voice indication of the user, pages corresponding to the functions may be switched for display.

For example, if voice instructions received by the mobile phone 100 are different, displayed pages are also different. For example, when the mobile phone 100 receives the voice instruction "generate a birthday video of Qiuqiu", the mobile phone 100 enters the dialog page of the voice assistant. If the mobile phone 100 receives a voice instruction "manufacture a video", the mobile phone 100 enters a recommendation page corresponding to the "recommend" function in response to the voice instruction "manufacture a video". The recommendation page may include recommendation cards of a plurality of video themes, such as including a recommendation card of a birthday blessing and a recommendation card of a trip video. If the mobile phone 100 receives selection of the recommendation card of the birthday blessing by the user, the mobile phone 100 displays, in the interface, the dialog page for video production.

To quickly enable the video production function when the user needs to manufacture a video, in some implementations, the mobile phone 100 may also predict a video production behavior of the user. When predicting that the user has a video production requirement, the mobile phone 100 may display the recommendation card in the desktop interface. In this way, the mobile phone 100 can provide a quick entry to the video production function of the voice assistant by using the recommendation card, to provide convenience for the user. If the mobile phone 100 receives a user operation of tapping the recommendation card by the user, the mobile phone 100 enters the dialog page of the voice assistant.

In this implementation, the mobile phone 100 records one or more reminder events, where each reminder event includes an event date and an event theme. The reminder event is used to trigger the mobile phone 100 to display, in the desktop interface, a recommendation card for video production. In a blessing scenario, the reminder event may be a birthday event, an anniversary event, a festival event, or the like. The user is very likely to have a video production requirement on or before the event date of the reminder event. Therefore, the mobile phone 100 displays, in the desktop interface within preset duration before the event date of the reminder event, the recommendation card for video production.

For example, using an example in which the reminder event is a birthday event, the event date of the birthday event is "January 1", and the event theme is "Qiuqiu's birthday". One week before January 1 (an example of the preset duration), the mobile phone 100 starts to display, in the desktop interface, the recommendation card for video production.

Optionally, the mobile phone 100 may also carry the event theme of the reminder event in the recommendation card displayed in the desktop interface. For example, 404 in FIG. 4A, FIG. 4B, FIG. 4C, FIG. 4D, and FIG. 4E shows the recommendation card displayed by the mobile phone 100 in the desktop, where the recommendation card carries controls "Qiuqiu's birthday" (an example of the event theme) and "create a video". The "create a video" control is an entry to the dialog page. If the mobile phone 100 receives a tap operation at "create a video" of the recommendation card, the mobile phone 100 enters the dialog page of the voice assistant (as shown in 405 in FIG. 4A, FIG. 4B, FIG. 4C, FIG. 4D, and FIG. 4E).

S302: In response to a user operation of the user on the video generation control, the mobile phone 100 generates a first video based on at least one image, and displays a preview prompt window of the first video in the dialog page of the voice assistant.

A prompt box 3011 for video generation is provided in the dialog page displayed by the mobile phone 100. The prompt box includes the video generation control. If the mobile phone 100 receives the tap operation of the user at the video generation control in the prompt box of the dialog page, the mobile phone 100 generates the first video, and outputs a preview prompt window 3021 of the first video in the dialog page of the voice assistant.

The first video is a video generated based on the at least one image. For example, the mobile phone 100 synthesizes the at least one image into a video based on a first operation, to obtain the first video, and outputs the preview prompt window of the first video in the dialog page of the voice assistant.

To generate a video that satisfies a user requirement, in some implementations, the prompt box displayed by the mobile phone 100 on the dialog page may include at least one image set item associated with the event theme. Each image set item corresponds to one image set. Each image set includes at least one image. Images in different image sets may be different, or same images may exist in different image sets. The mobile phone 100 may provide at least one image set item for the user to select the at least one image for synthesizing the first video.

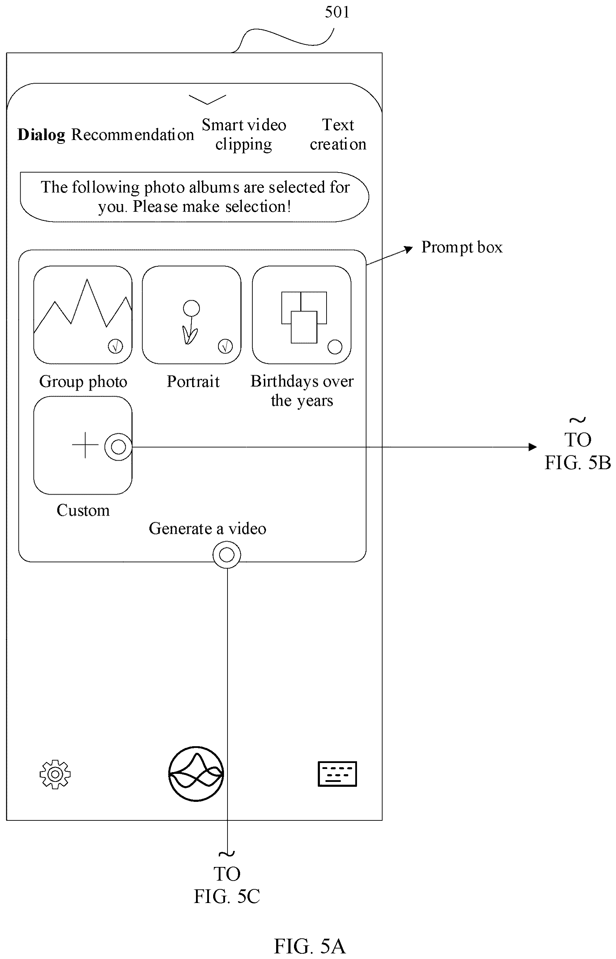

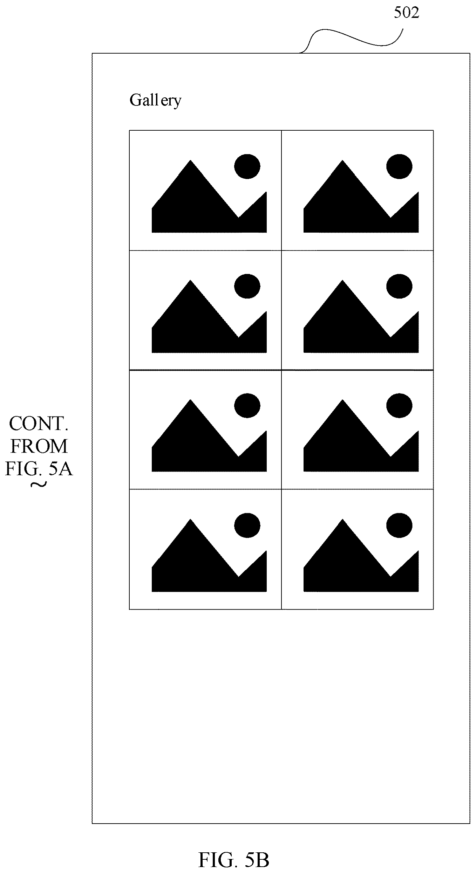

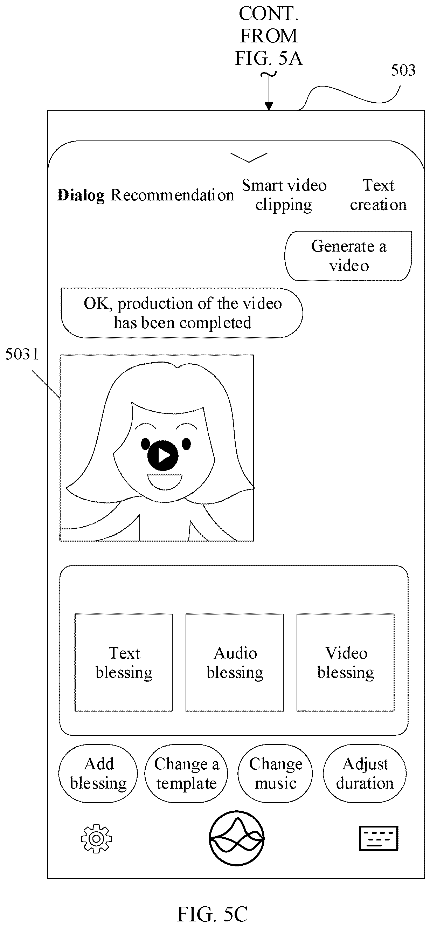

It may be understood that, the image set item associated with the event theme is an image set item corresponding to an image set associated with the event theme. For example, as shown in 501 in FIG. 5A, FIG. 5B, and FIG. 5C, the mobile phone 100 displays image set items "group photo", "portrait", and "birthdays over the years" in the prompt box of the dialog page. An image set associated with an event theme has an image set whose set theme is consistent with or similar to the event theme, or has an image set whose set theme has a same theme word as the event theme. Each image set may have a set theme, so that the mobile phone 100 can quickly find an image set of a specific theme (for example, the event theme). For example, the mobile phone 100 may cluster (or referred to as material clustering) stored images, for example, cluster the images based on a shooting time, a shooting place, a shooting object, and the like of the images, to obtain at least one image set, and set a set theme for each image set, for example, set a set theme such as "festival", "Qiuqiu", "trip", or the like.

In this implementation, if the mobile phone 100 displays the recommendation card in the desktop interface and the recommendation card carries an event theme of a reminder event, the mobile phone 100 enters the dialog page of the voice assistant in response to the user operation received at the recommendation card, and the mobile phone 100 may obtain the event theme carried in the recommendation card. If the mobile phone 100 enters the dialog page of the voice assistant in response to the voice instruction, the mobile phone 100 obtains the event theme in the voice instruction. For example, if the voice instruction is "generate a birthday video of Qiuqiu", the event theme is "Qiuqiu" or "Qiuqiu's birthday".

In an example, as shown in 404 in FIG. 4A, FIG. 4B, FIG. 4C, FIG. 4D, and FIG. 4E, the mobile phone 100 displays, in the desktop interface, the recommendation card for video production. The recommendation card carries the event theme "Qiuqiu's birthday". If the mobile phone 100 receives a tap operation at "create a video" of the recommendation card, the mobile phone 100 enters the dialog page of the voice assistant (as shown in 405 in FIG. 4A, FIG. 4B, FIG. 4C, FIG. 4D, and FIG. 4E), and displays the prompt box in the dialog page, where the prompt box includes a plurality of image set items "group photo", "portrait", and "birthdays over the years", and the video generation control "generate a video" Image sets corresponding to these image set items are associated with the event theme "Qiuqiu's birthday". As shown in 501 in FIG. 5A, FIG. 5B, and FIG. 5C, if the mobile phone 100 receives a tap operation of the user at the video generation control "generate a video", the mobile phone 100 synthesizes images selected in the plurality of image set items "photo group", "portrait", and "birthdays over the years" into a video, to obtain the first video. After synthesis of the video is completed, as shown in 503 in FIG. 5A, FIG. 5B, and FIG. 5C, the mobile phone 100 may further make a text prompt in the dialog page that video production is completed, and display a preview prompt window 5031 of the first video in the dialog page.

In this embodiment of this application, images selected by the mobile phone 100 from the at least one image set item provided in the dialog page may not be required by the user for synthesis into the first video. To enable the first video to meet the user requirement to the greatest extent, in some implementations, the mobile phone 100 may further determine, based on a selection operation of the user, at least one image for producing the first video.

For example, as shown in 501 in FIG. 5A, FIG. 5B, and FIG. 5C, one image set item is displayed as a set icon. If the mobile phone 100 receives a user operation at a set icon of an image set item, the mobile phone 100 pops up images corresponding to the image set item. For example, if the mobile phone 100 receives a user operation of tapping "birthdays over the years" by the user, the mobile phone 100 displays images corresponding to the image set item "birthdays over the years". The user may select images from images in the image set. In response to the selection operation of the user in the images in the at least one image set, the mobile phone 100 determines at least one image selected in the image set "birthdays over the years".

In some other examples, in addition to providing the at least one image set item in the dialog page, the mobile phone 100 may further provide custom items corresponding to all images in the mobile phone 100. As shown in 501 in FIG. 5A, FIG. 5B, and FIG. 5C, if the mobile phone 100 receives the tap operation of the user at the custom place, as shown in 502 in FIG. 5A, FIG. 5B, and FIG. 5C, the mobile phone 100 displays all images stored in the mobile phone 100, for example, displays all images recorded in the gallery application. The user may select images from images in the image application. The mobile phone 100 determines the selected at least one image in response to a selection operation of the user on images corresponding to the custom items.

S303: The mobile phone 100 displays a video add card in the dialog page, where the video add card includes a control corresponding to at least one content add mode.

After outputting the first video in the dialog page, the mobile phone 100 may further pop up a video add card 3031 in the dialog page, so as to automatically recommend a plurality of video content adding schemes to the user. Each content add mode corresponds to one video content adding scheme. In some implementations, the video add card includes a control corresponding to at least one content add mode in a text add mode, an audio add mode, and a video add mode. For ease distinction, the control of the text add mode may be referred to as a first control, the control of the audio add mode may be referred to as a second control, and a control of the video add mode may be referred to as a third control.

The text add mode is used to provide a video content adding scheme in a text manner. The user may add text to the video based on a preference or a requirement of the user, for example, add a blessing in a text form to the video.

The audio add mode is used to provide a video content adding scheme in an audio manner. The user may add audio to the video based on a preference or a requirement of the user, for example, add blessing voice in an audio form to the video.

The video add mode is used to provide a video content adding scheme in a video manner. The user may add a video clip to the video based on a preference or a requirement of the user, for example, add a blessing video to the video.

In some implementations, the control corresponding to the content add mode in the video add card displayed by the mobile phone 100 in the dialog page may vary depending on the event theme. For example, when the event theme is an event theme of a blessing scenario such as the birthday or the anniversary, the video add card popped up by the mobile phone 100 in the dialog page may include the control of the text add mode, the control of the audio add mode, and the control of the video add mode. For another example, when the event theme is an event theme of a non-blessing scenario such as the trip, the video add card popped up by the mobile phone 100 in the dialog page may include the control of the text add mode, and does not include the control of the audio add mode or the control of the video add mode.

For example, the event theme is the birthday theme. As shown in 501 of FIG. 5A, FIG. 5B, and FIG. 5C, if the mobile phone 100 receives a tap operation of "generate a video" of the user, the mobile phone 100 generates the first video based on at least one image in "group photo" and "portrait" selected by the user, and displays the preview prompt window of the first video in the dialog page. Further, the video add card popped up by the mobile phone 100 in the dialog page includes controls of three content add modes corresponding to "text blessing" (corresponding to the first control of the text add mode), "audio blessing" (corresponding to the second control of the audio add mode), and "video blessing" (corresponding to the third control of the video add mode).

In some implementations, to better provide a video production service for the user and meet diversified requirements of the user, after displaying the preview prompt window of a video (such as the first video) in the dialog page, the mobile phone 100 may also display a plurality of setting items for video production at the bottom of the dialog page. As shown in 503 in FIG. 5A, FIG. 5B, and FIG. 5C, after displaying the preview prompt window of the first video, the mobile phone 100 displays an "add blessing" setting item, a "change a template" setting item, a "change music" setting item, and an "adjust duration" setting item at the bottom of the dialog page.

The "add blessing" setting item is used to call out the video add card. If receiving a tap operation of the user at a position of the "add blessing" setting item, the mobile phone 100 displays the video add card.

The "change a template" setting item is used to provide a video production template. The video production template is used to provide a video display style, for example, provide a background image for displaying added content. If receiving the tap operation of the user at a position of the "change a template" setting item, the mobile phone 100 displays a plurality of production templates to the user. Display styles of the production templates are different. The display style may include a color, a pattern, a text style, an animation effect, and the like. The user may select one production template from the plurality of production templates based on a preference of the user. The mobile phone 100 may synthesize a video based on the video production template. For example, when the mobile phone 100 performs video synthesis on at least one image to obtain the first video, a production template may be used to perform video synthesis on the at least one image, to obtain the first video. An animation effect of switching between different images in the first video is consistent with an animation effect provided by the production template.

The "change music" setting item is used to provide music for video production. If receiving a tap operation of the user at a position of the "change music" setting item, the mobile phone 100 displays a plurality of music files to the user. The user may select one music file from the plurality of music files as background music of the video based on a preference of the user.

The "adjust duration" setting item is used to adjust duration of the video. If receiving the tap operation of the user at a position of the "adjust duration" setting item, the mobile phone 100 displays a video duration setting window to the user. The user may set duration of the video.

S304: If receiving a user operation of the user on the first control, the mobile phone 100 displays a text edit window in the dialog page in response to the user operation of the user on the first control.

The user may select a control of any content add mode from the video add card. If receiving a tap operation at a control of any content add mode in the dialog page, the mobile phone 100 pops up, in the dialog page, a content input window corresponding to the content add mode indicated by the tap operation. Using an example in which the mobile phone 100 receives a user operation of tapping the first control in the video add card by the user, the mobile phone 100 displays a text edit window in the dialog page in response to the user operation of tapping the first control by the user. The text edit window is used to inform the user to enter text content.

It may be understood that, content input windows corresponding to different content add modes are different. The content input window and the added content correspond to the content add mode selected by the user. For example, when the content add mode selected by the user is the text add mode, the content input window is the text edit window, and the added content is text content. When the content add mode selected by the user is the audio add mode, the content input window is an audio input window, and the added content is audio content. When the content add mode selected by the user is the video add mode, the content input window is a video shooting window, and the added content is video content.

S305: The mobile phone 100 obtains text content in the text edit window.

The mobile phone 100 obtains the added content by using the content input window corresponding to the content add mode selected by the user. When the content add mode selected by the user is the text add mode, the mobile phone 100 obtains the text content by using the text edit window.

In some implementations, the added content obtained by the mobile phone 100 is collected based on a user operation. For example, the mobile phone 100 obtains text content, audio content, or video content entered by the user. In some other implementations, the added content obtained by the mobile phone 100 is recommended by the mobile phone 100. For example, the mobile phone 100 may provide the recommended added content in the content input window for the user to select, for example, provide recommended text content, audio content, or video content. The mobile phone 100 may obtain, by using the content input window, the added content selected by the user. For example, the mobile phone 100 carries a recommendation in the text edit window, and when the user confirms, the mobile phone 100 may use the recommendation carried in the text edit window as the text content.

S306: The mobile phone 100 generates a second video based on the text content and the first video, and displays a preview prompt window of the second video in the dialog page.

After obtaining the text content, the mobile phone 100 adds the text content to the first video, to generate the second video. Further, the mobile phone 100 outputs a preview prompt window 3061 of the second video in the dialog page, for the user to watch the second video.

For example, the mobile phone 100 may convert the obtained text content into a video (or referred to as a third video), and further synthesize the third video and the first video, to obtain the second video. For example, the third video is spliced with the first video, to obtain the second video. Further, the mobile phone 100 displays the preview prompt window of the second video in the dialog page. If receiving a user operation of tapping the preview prompt window of the second video, the mobile phone 100 plays the second video, for the user to watch the generated second video.

As described above, to better provide the video production service for the user and meet diversified requirements of the user, after displaying the preview prompt window of the video, the mobile phone 100 may also display the plurality of setting items for video production at the bottom of the dialog page. In some implementations, after displaying the preview prompt window of the second video, the mobile phone 100 may further display the "add blessing" setting item, the "change a template" setting item, the "change music" setting item, and the "adjust duration" setting item at the bottom of the dialog page.

For example, when generating the second video based on the text content and the first video, the mobile phone 100 may use a production template provided by the "change a template" setting item, and synthesize the second video based on the added content and the first video. For example, when generating the second video based on the text content and the first video, the mobile phone 100 may add the text content to the selected production template, to generate the third video having a display style of the production template. Further, the mobile phone 100 synthesizes the third video and the first video, to obtain the second video.

In some examples, when the mobile phone 100 receives a user operation of selecting a production template by the user, the mobile phone 100 may use the production template selected by the user to manufacture the second video. When the mobile phone 100 does not receive a user operation of selecting a production template by the user, the mobile phone 100 may use a default production template to manufacture the second video. The default production template is a production template pre-specified in the mobile phone 100. Alternatively, the default production template is a production template used by the mobile phone 100 during previous video production.

In some other examples, based on the event theme, the mobile phone 100 may automatically select a suitable production template to manufacture the second video. For example, when the event theme is "Qiuqiu's birthday", the mobile phone 100 may select a production template preferred by women such as a pink or purple template. In this way, the mobile phone 100 can automatically configure a suitable production template for the manufactured video, to implement intelligent video production, thereby improving user experience of video production.

Optionally, when the mobile phone 100 generates the second video based on the text content and the first video, a music file provided by the "change music" setting item may be used as background music, which is synthesized together with the text content and the first video into the second video.

In some examples, when the mobile phone 100 receives a user operation of selecting music by the user, the mobile phone 100 may use the music file selected by the user to manufacture the second video. When the mobile phone 100 does not receive a user operation of selecting music by the user, the mobile phone 100 may use the default music file to manufacture the second video. The default production template is a music file pre-specified in the mobile phone 100. Alternatively, the default production template is a music file used by the mobile phone 100 during previous video production.

In some other examples, based on the event theme, the mobile phone 100 may automatically select a suitable music file to manufacture the second video. For example, when the event theme is "Qiuqiu's birthday", the mobile phone 100 may select a music file related to the birthday such as a happy birthday song. In this way, the mobile phone 100 can automatically configure suitable background music for the manufactured video, to implement intelligent video production, thereby improving user experience of video production.

Optionally, when the mobile phone 100 generates the second video based on the added content and the first video, video duration provided by the "adjust duration" setting item may be used to synthesize the second video with duration set by the user.

In some examples, when the mobile phone 100 receives a user operation of setting duration by the user, the mobile phone 100 may use the duration set by the user to manufacture the second video. When the mobile phone 100 does not receive a user operation of setting duration by the user, the mobile phone 100 manufactures the second video with default duration. The default duration is preset by the mobile phone 100. Alternatively, the default duration is duration used by the mobile phone 100 during previous video production.

In some other examples, the mobile phone 100 may automatically set suitable duration for the manufactured video. For example, one image corresponds to one piece of unit duration, for example, 1 second or 2 seconds. Using an example in which the unit duration is 2 seconds, if one video includes 10 images, the mobile phone 100 sets 10-second duration for the video. In this way, the mobile phone 100 can automatically set suitable duration for the manufactured video, to implement intelligent video production, thereby improving user experience of video production.

In some other examples, if receiving a tap operation of the user at the position of the "add blessing" setting item, the mobile phone 100 may display the video add card again, for the user to select from the at least one content add mode provided by the video add card.

In the method provided in this embodiment of this application, guidance prompts for video production can be provided in a dialog manner by using the voice assistant, so that the user can manufacture a video based on the prompts output by the voice assistant in the dialog page, thereby reducing the difficulty of video production. In addition, the voice assistant also provides a plurality of content add modes. The mobile phone 100 may add the added content corresponding to any content add mode to the video under control of the user, to meet the diversified requirements of the user for video production, thereby improving user experience.

The following separately describes the video production processes corresponding to the text add mode, the audio add mode, and the video add mode.

In an implementation, using an example in which the user selects the first control of the text add mode, the video production process corresponding to the text add mode is described with reference to a blessing scenario.

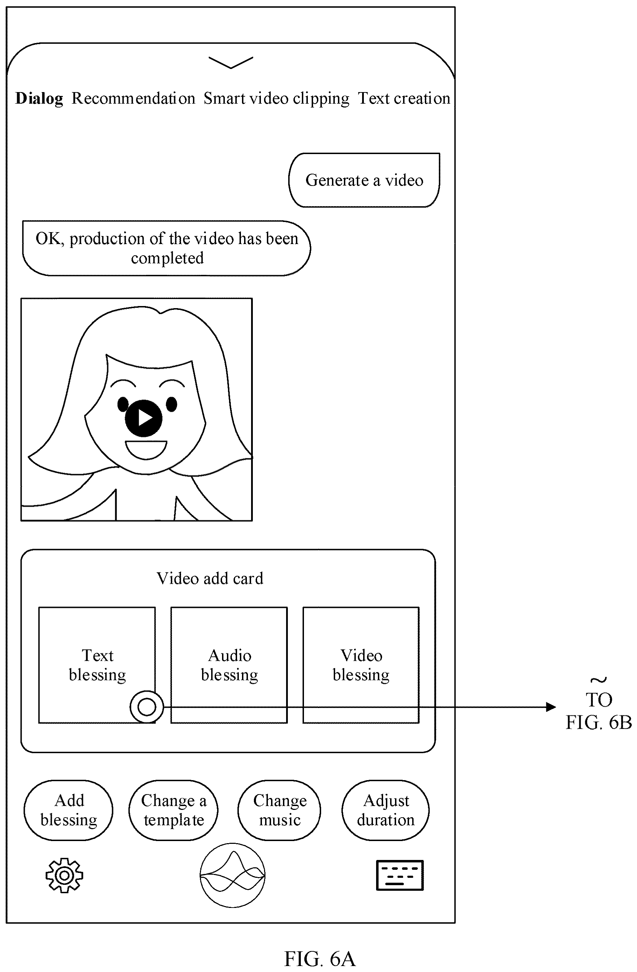

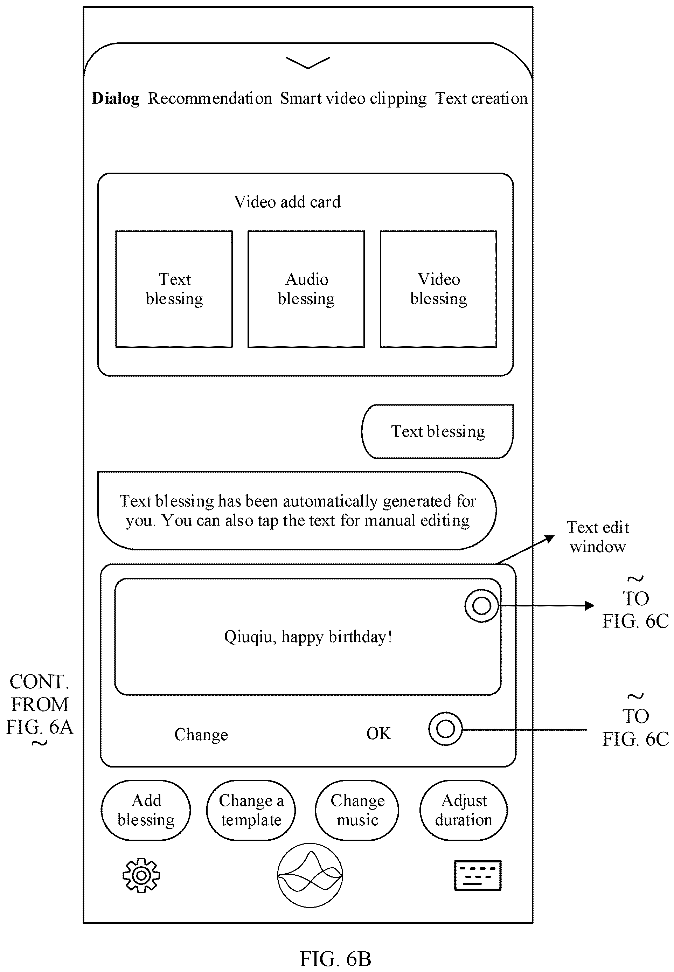

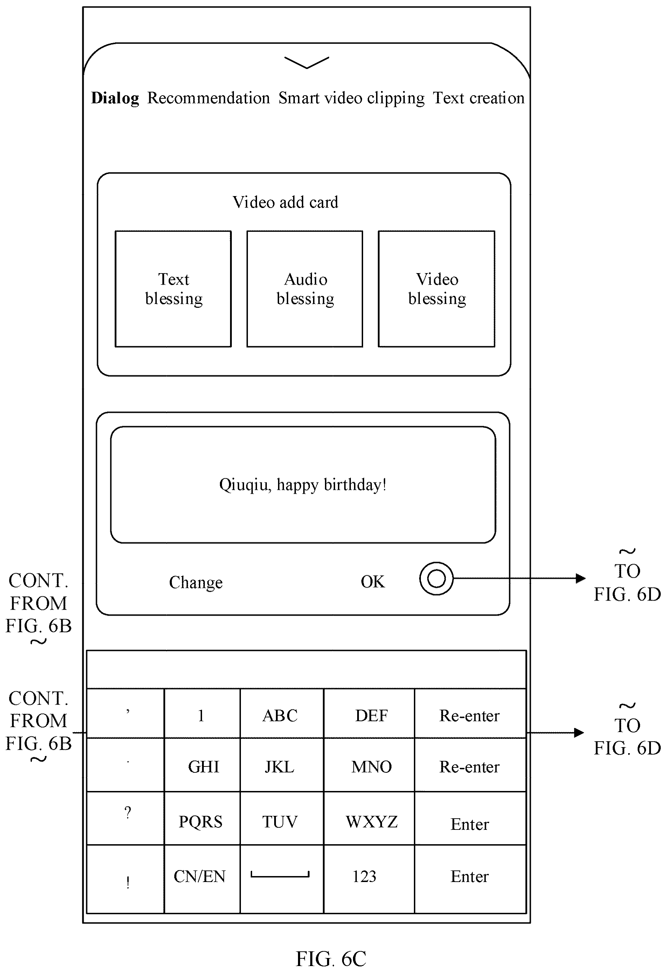

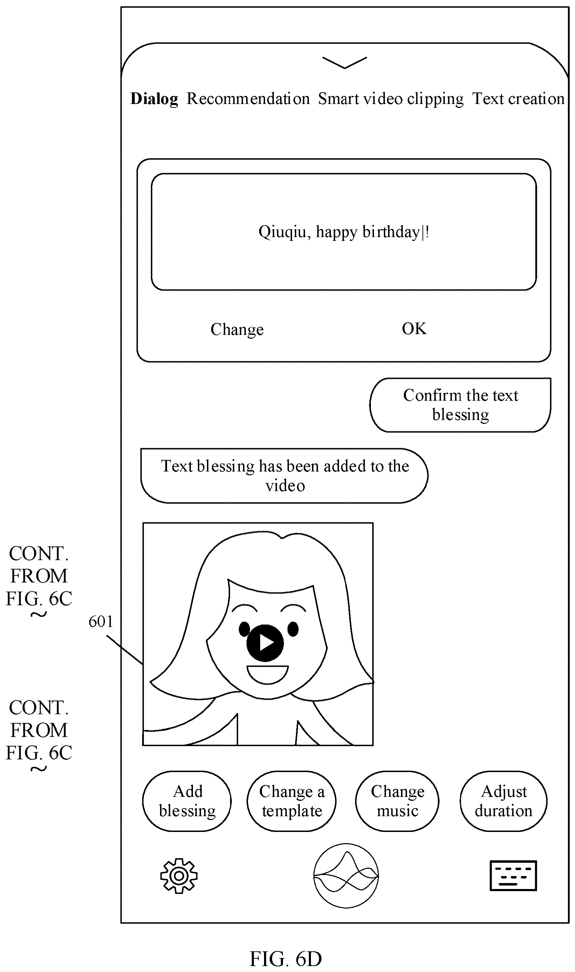

As shown in FIG. 6A, FIG. 6B, FIG. 6C, and FIG. 6D, the mobile phone 100 receives a tap operation at the "text blessing" (an example of the first control) provided in the dialog page. In response to the tap operation of the user at the "text blessing", a bubble "text blessing" is displayed on the right side of the dialog page, and a bubble "Text blessing has been automatically generated for you. You can also tap the text for manual editing" and a text edit window are displayed below the bubble "text blessing". The text edit window is used to inform the user to enter the text content added to the video. After the mobile phone 100 obtains the text content in the text edit window, if the mobile phone 100 receives a tap operation of the user at a position "OK" of the text edit window, the mobile phone 100 generates the second video based on the text content and the first video. For example, the mobile phone 100 adds the text content to a first production template (an example of the production template) of the video, to generate the third video. Further, the mobile phone 100 splices the third video before the first video, to obtain the second video. The second video displays text content at the beginning of the video. Further, the mobile phone 100 displays a bubble "Text blessing has been added to the video" and a preview prompt window 601 of the second video in the dialog page. The user may tap the preview prompt window of the second video to view the manufactured second video.

In this example, the user may enter text in the content output window as the text content added to the first video. The mobile phone 100 may obtain, in the text edit window, the text content entered by the user.

Optionally, to provide a more convenient video production process for the user, the mobile phone 100 may also automatically carry a recommendation in the text edit window. For example, as shown in FIG. 6A, FIG. 6B, FIG. 6C, and FIG. 6D, the mobile phone 100 carries a recommendation "Qiuqiu, happy birthday to you!" in the text edit window. If the mobile phone 100 receives a tap operation of the user at the position of "OK" of the text edit window, the mobile phone uses the recommendation carried in the text edit window as the text content. In this way, the mobile phone 100 can actively provide the user with the text content added to the video, to save time for the user to enter the text content in the text edit window.

In this example, as shown in FIG. 6A, FIG. 6B, FIG. 6C, and FIG. 6D, if the mobile phone 100 receives a tap operation of the user at the position of the recommendation in the text edit window, the mobile phone displays a keyboard control in the dialog page, and obtains, by using the keyboard control, the text content entered by the user.

Optionally, the text edit window is also provided with a change option. If the mobile phone 100 receives a user operation of the user on the change option, for example, receives a tap operation on the change option, it indicates that the mobile phone 100 receives a user operation of changing the recommendation in the text edit window. The mobile phone 100 updates the recommendation in the text edit window in response to a third operation. For example, as shown in FIG. 6A, FIG. 6B, FIG. 6C, and FIG. 6D, "change" (an example of the change option) is disposed at the bottom of the text edit window. If the mobile phone 100 receives a tap operation of the user at the position of "change", the mobile phone 100 changes a first recommendation "Qiuqiu, happy birthday to you!" displayed in the text edit window to "Qiuqiu, I will always be by your side and spend every birthday with you!".

In an example, the recommendation carried in the text edit window may be generated based on the video theme of the first video. The video theme of the first video is consistent with the foregoing event theme. Alternatively, the first video may not be generated based on a recommendation event. In this case, the video theme of the first video may be a video title.

For example, the mobile phone 100 is provided with a recommendation model for generating a recommendation. The recommendation model may be a trained machine learning model. The mobile phone 100 may input the video theme of the first video into the recommendation model, to obtain at least one recommendation word output by the recommendation model, such as 10 recommendations output by the recommendation model. The mobile phone 100 may display, in the text edit window, any recommendation word obtained by the recommendation model.

In another implementation, using an example in which the user selects the second control of the audio add mode, the video production process corresponding to the audio add mode is described with reference to a blessing scenario.

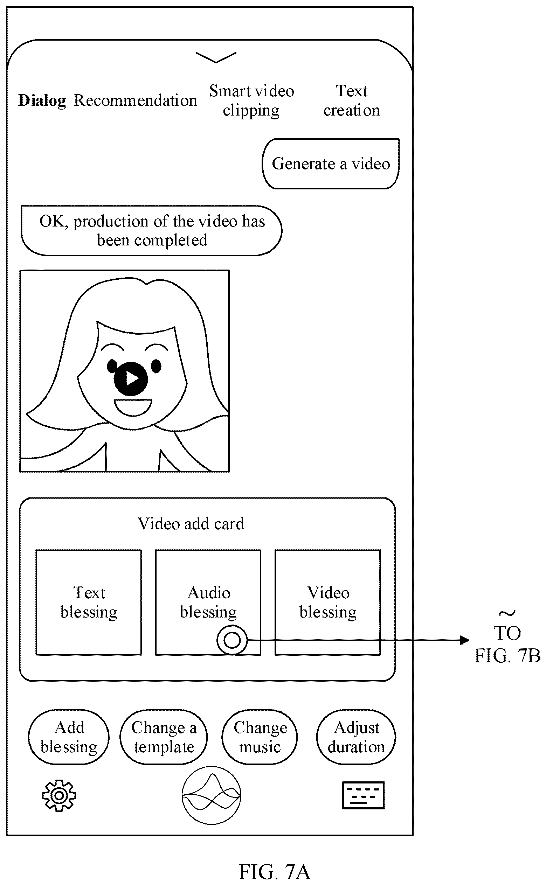

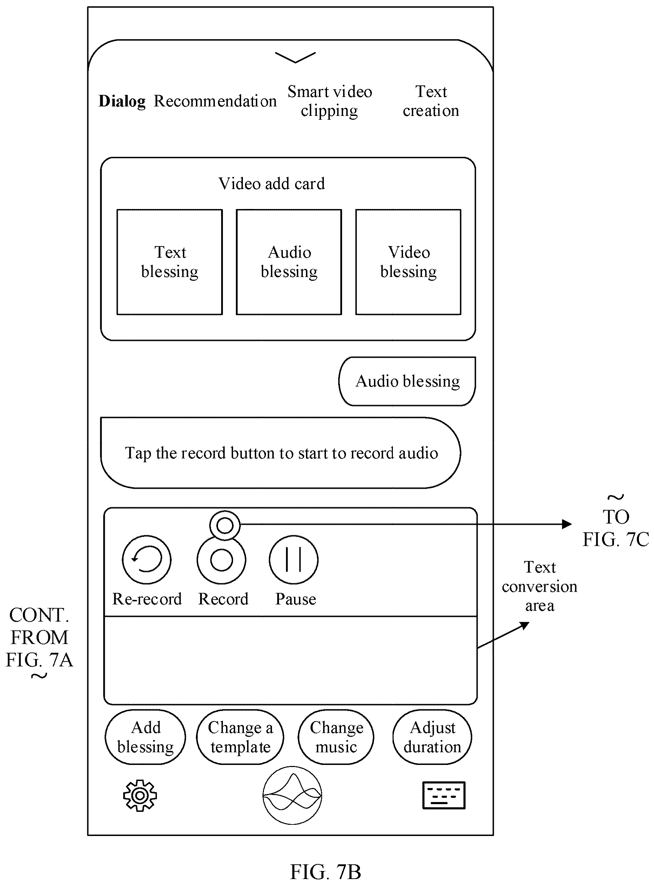

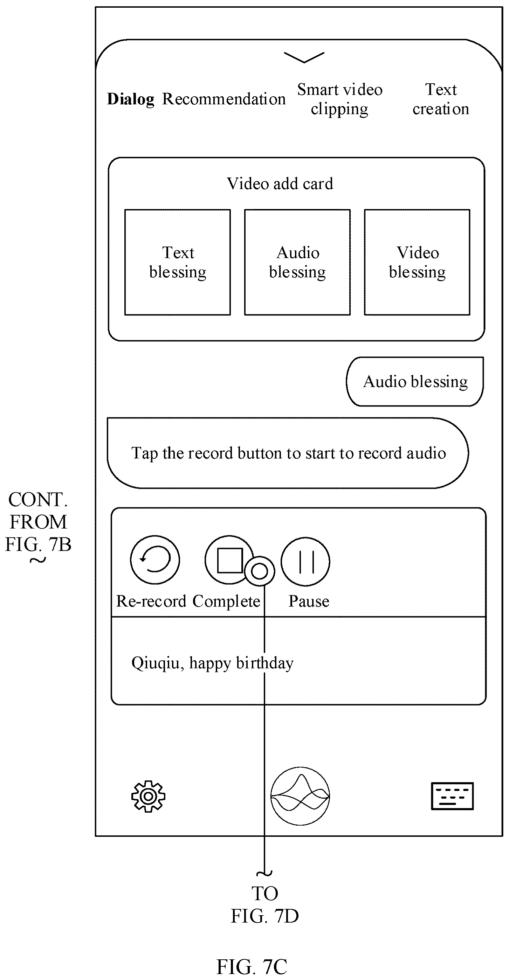

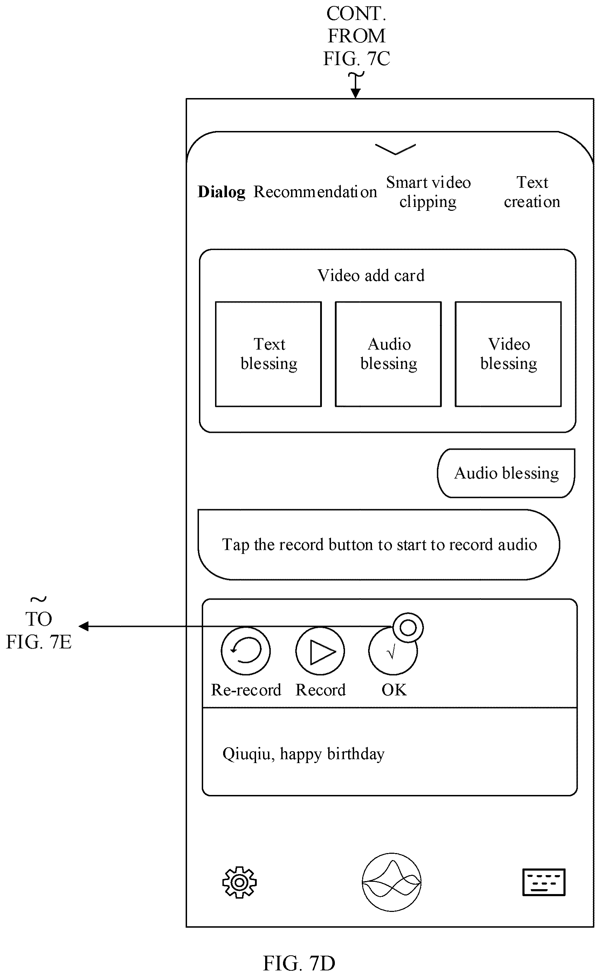

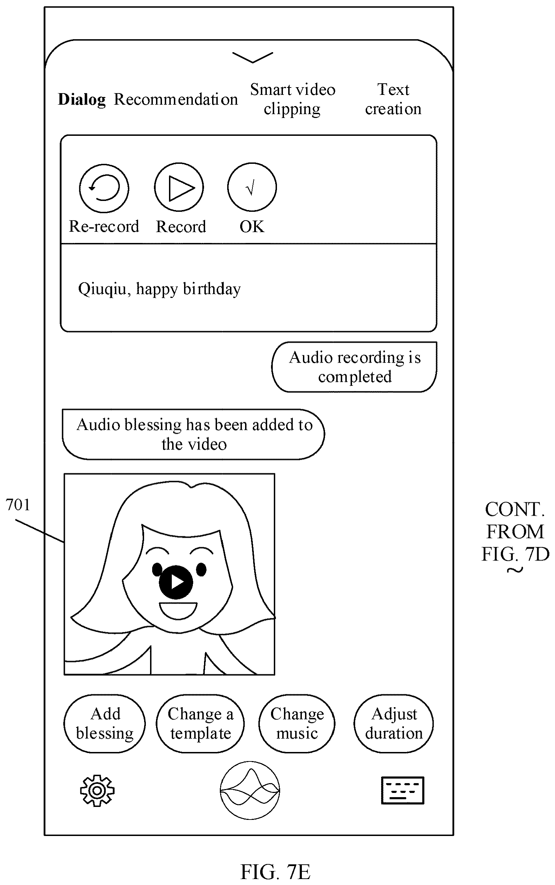

As shown in FIG. 7A, FIG. 7B, FIG. 7C, FIG. 7D, and FIG. 7E, the mobile phone 100 receives a tap operation at the "audio blessing" in the dialog page. In response to the tap operation of the user at the "audio blessing", the mobile phone 100 displays a bubble "audio blessing" and an audio input window in the dialog page. The audio input window is used to provide a recording function. When recording is not started, a recording function key is disposed in the audio input window. If the mobile phone 100 receives a tap operation of the user at a position of the recording function key, the mobile phone 100 enables a recording function of the microphone, and collects voice data of the user by using the microphone. The voice data is used as audio content. In a recording process, the recording function key of the audio input window becomes a recording complete function key. If receiving a tap operation of the user at the position of the recording complete function key, the mobile phone 100 disables the recording function of the microphone. After recording is completed, a determining function key is disposed in the audio input window. If receiving a tap operation of the user at the position of the determining function key of the audio input window, the mobile phone 100 outputs a bubble "Audio recording is completed" in the dialog box in response to the tap operation, and generates a fourth video based on the audio content and the first video. For example, the mobile phone 100 synthesizes the audio content and a second production template (an example of the production template), to generate a fifth video. Further, the mobile phone 100 splices the fifth video before the first video, to obtain the fourth video. The fourth video provides audio content at the beginning of the video. Further, the mobile phone 100 displays a bubble "Audio blessing has been added to the video" and a preview prompt window 701 of the fourth video in the dialog page. The user may tap the preview prompt window 701 of the fourth video to view the manufactured fourth video.

Optionally, a pause function key is further disposed in the audio input window. The pause function key is used to pause recording of the audio content. In the recording process, if the mobile phone 100 receives a tap operation of the user at the position of the pause function key of the audio input window, in response to the tap operation, the mobile phone 100 pauses collection of the audio content by using the microphone. In this way, the user can pause recording of the audio content. In some examples, after recording is completed, the mobile phone 100 may cancel display of the pause function key in the audio input window.

Optionally, a preview function key is further disposed in the audio input window. The preview function key is used to provide a preview function of the audio content. For example, after recording is completed, the mobile phone 100 cancels display of the recording complete function key in the audio input window, and displays the preview function key in the audio input window. If the mobile phone 100 receives a tap operation of the user at the position of the preview function key of the audio input window, in response to the tap operation, the mobile phone 100 plays the audio content collected by using the microphone. In this way, the user can preview the input audio content, to determine whether the input audio content meets a requirement.

Optionally, a re-recording function key is further disposed in the audio input window. The re-recording function key is used to provide a re-input function of the audio content. If the mobile phone 100 receives a tap operation of the user at the position of the re-recording function key of the audio input window, in response to the tap operation, the mobile phone 100 re-collects the voice data of the user by using the microphone. In this way, the user can record the audio content repeatedly. For example, after previewing the audio content, if the user finds that the recorded audio content does not meet the requirement, the user may re-record the audio content until the user is satisfied.

Optionally, to present better video content and provide a more convenient video production process for the user, the mobile phone 100 may also provide a text conversion area in the audio input window. The text conversion area is used to provide text corresponding to the audio content. For example, as shown in FIG. 7A, FIG. 7B, FIG. 7C, FIG. 7D, and FIG. 7E, the text conversion area is located at the bottom of the audio input window. When recording the audio content, the mobile phone 100 converts the audio content into the text in real time, and displays the text corresponding to the audio content in the text conversion area of the audio input window. For example, when the audio content collected by the mobile phone 100 is "Qiuqiu, happy birthday", the mobile phone 100 displays text "Qiuqiu, happy birthday" at the same time in the text conversion area of the audio input window.

In some examples, the user may also modify the text displayed in the text conversion area. For example, if the mobile phone 100 receives the user operation of tapping the text conversion area by the user, the mobile phone 100 displays the keyboard control, and obtains a text edit operation of the user by using the keyboard control. The mobile phone 100 obtains text obtained after the user performs modification in the text conversion area, and uses the text as text corresponding to the audio content.

In some implementations, when generating the fourth video, the mobile phone 100 may also synthesize the text corresponding to the audio content, the audio content, and the first video together, to obtain the fourth video. The fourth video not only includes the audio content, but also includes the text corresponding to the audio content. The text corresponding to the audio content and the audio content are played at the same time. For example, after obtaining the audio content and the text corresponding to the audio content, the mobile phone 100 adds the text corresponding to the audio content to the production template of the video, and performs video synthesis on the audio content and the production template that carries the text corresponding to the audio content, to generate the fifth video. The fifth video includes the audio content and the text synchronous with the audio content. Further, the mobile phone 100 splices the fifth video before the first video, to obtain the fourth video. Further, the mobile phone 100 outputs the preview prompt window of the fourth video in the dialog page. The fourth video provides audio content and text synchronous with the audio content at the beginning of the video. For example, using an example in which the audio content is "Qiuqiu, happy birthday", the beginning of the fourth video provides voice "Qiuqiu, happy birthday" and text "Qiuqiu, happy birthday" synchronous with the voice.

In this way, the mobile phone 100 can not only carry the audio content provided by the user in the manufactured video, but also actively add the text corresponding to the audio content to the manufactured video, so as to present better video content and provide a more convenient video production process for the user.

In another implementation, using an example in which the user selects the third control of the video add mode, the video production process corresponding to the video add mode is described with reference to a blessing scenario.

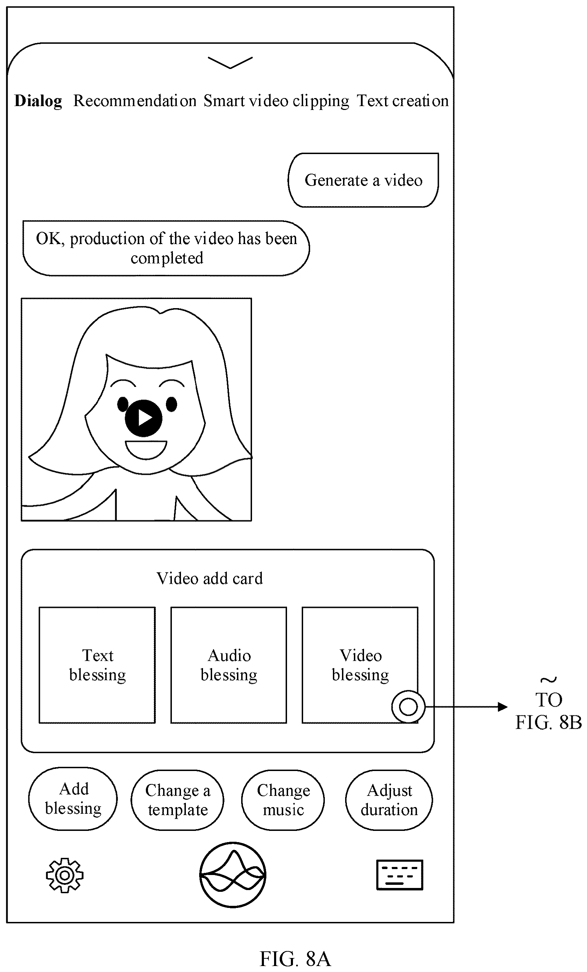

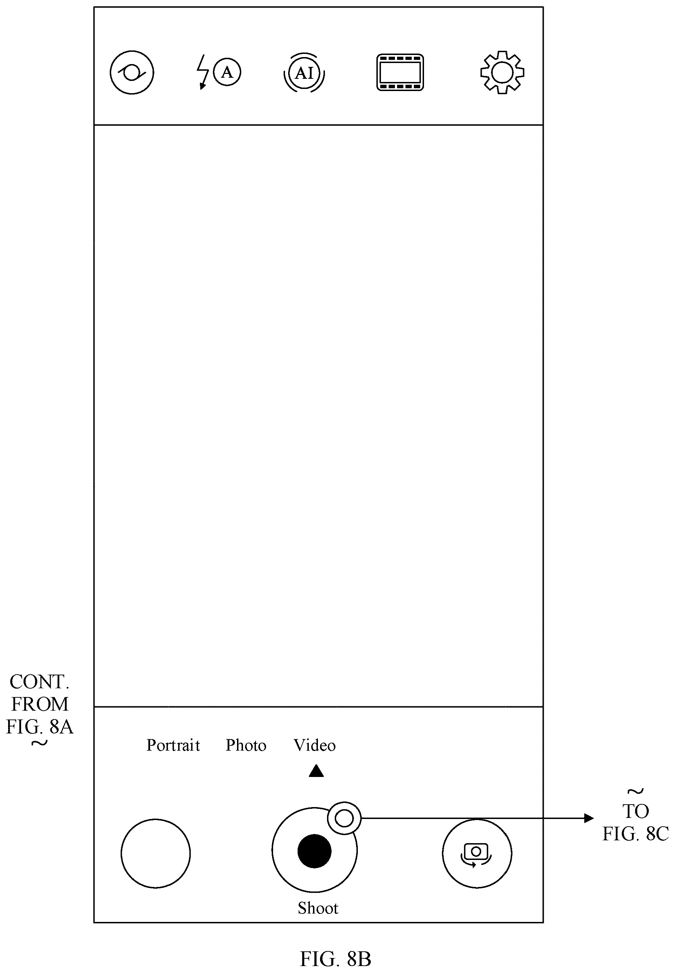

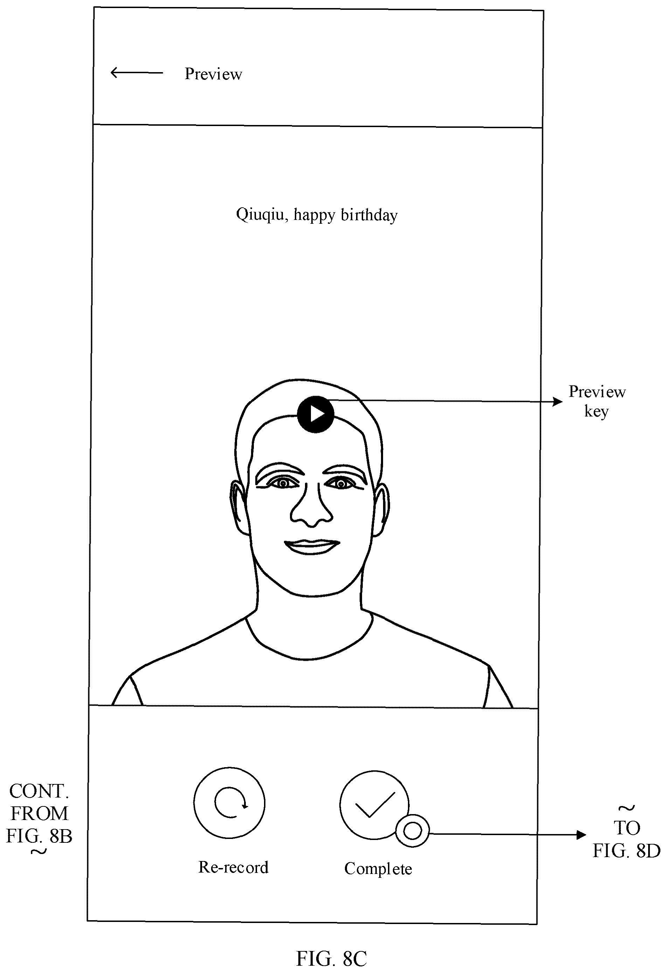

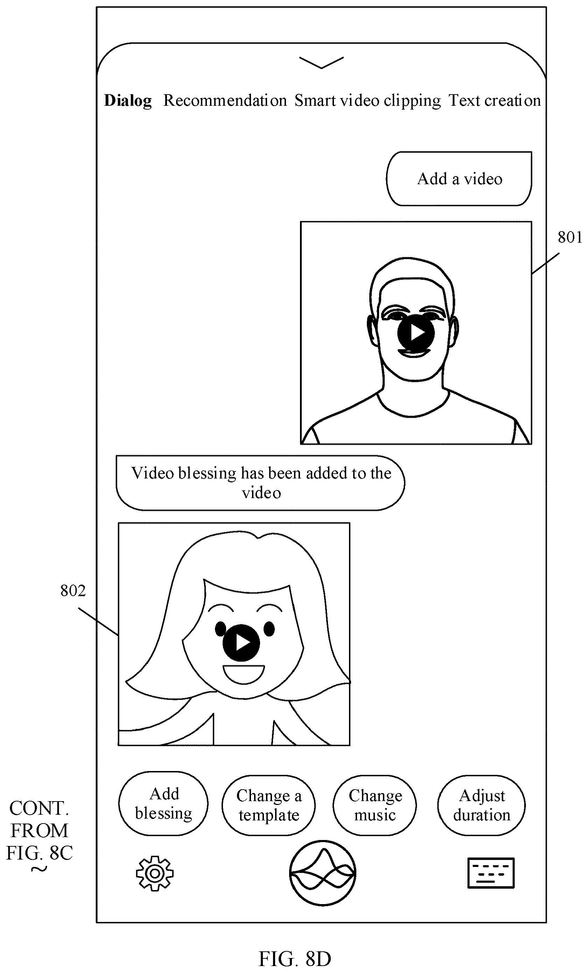

As shown in FIG. 8A, FIG. 8B, FIG. 8C, and FIG. 8D, the mobile phone 100 receives a tap operation at the "video blessing" in the dialog page. In response to the tap operation of the user at the "video blessing", the mobile phone 100 displays a bubble "add a video" in the dialog page and pops up a video shooting window. The video shooting window is used to provide a video shooting function. For example, in response to the tap operation, the mobile phone 100 invokes a recording function of the camera application by using the voice assistant, and displays a shoot page (an example of the video shooting window) of the camera application. A shooting function key is disposed in the video shooting window. If the mobile phone 100 receives a tap operation of the user at a position of the shooting function key, the mobile phone 100 enables a shooting function of the camera, and collects video data by using the camera (for example, the front-facing camera). The video data may be used as to-be-added video content. If the mobile phone 100 receives the tap operation of tapping the shooting function key by the user again, the mobile phone 100 displays a video preview page. The video preview page is used to preview the video content. A preview key is disposed in the video preview page. If the mobile phone 100 receives a user operation of tapping the preview key by the user, the mobile phone 100 plays the recorded video content in response to the user operation of tapping the preview key by the user. A complete function key is further disposed in the video preview page. If the mobile phone 100 receives a tap operation of the user at the position of the complete function key of the video preview page, in response to the tap operation, the mobile phone 100 exits from the video preview page, and outputs a preview prompt window 801 of the video content in the dialog page. The user may tap the preview prompt window 801 of the video content to view the recorded video content. In addition, the mobile phone 100 further generates a sixth video based on the video content and the first video in response to the tap operation. Further, the mobile phone 100 splices the video content before the first video, to obtain the sixth video. The sixth video provides video content at the beginning of the video. Further, the mobile phone 100 outputs a preview prompt window 802 of the sixth video in the dialog page. The user may tap the preview prompt window 802 of the sixth video to view the manufactured sixth video.

Optionally, in a video data collection process, the mobile phone 100 may also convert audio data in the video data into text, to obtain text corresponding to the video data, and synthesize the text corresponding to the video data and the video data, to obtain the video content. In this way, the video content also includes matching text, such as the text "Qiuqiu, happy birthday". Finally, the sixth video presented by the mobile phone 100 to the user not only provides collected video data, but also includes text corresponding to the video data, so that user experience is improved.

Optionally, a re-recording function key is further disposed in the video preview page. The re-recording function key is used to provide a re-recording function of the video content. If the mobile phone 100 receives a tap operation of the user at the position of the re-recording function key of the video preview page, in response to the tap operation, the mobile phone 100 re-collects the video data of the user by using the camera. In this way, the user can record the video content repeatedly. For example, after previewing the video content, if the user finds that the recorded video content does not meet the requirement, the user may re-record the video content until the user is satisfied.

In the method provided in this embodiment of this application, a video production process of a blessing scenario can be provided by using the voice assistant, and a plurality of content add modes for adding the video content are also provided, to meet the diversified requirements of the user for video production to the greatest extent, thereby improving user experience.

It should be noted that personal information used in the technical solutions of this application (such as voice data, video data, and the like of the user) is limited only to information that has obtained the individual's separate consent, including but not limited to notifying and reminding the user to read the relevant user agreement (notification) before the user uses the function, and signing the agreement (authorization) including authorization of relevant user information.

Some other embodiments of this application further provide an electronic device, including: a screen, a memory, and one or more processors. The screen and the memory are separately coupled to the processor. The screen is configured to display an interface. The memory stores computer program code, where the computer program code includes computer instructions. When the computer instructions are executed by the processor, the electronic device may perform the functions or steps in the foregoing method embodiments. Certainly, the electronic device may further include another hardware structure. For example, the electronic device may further include a hardware structure such as a sensor or a communication module. For the structure of the electronic device, refer to the structure of the mobile phone 100 shown in FIG. 2.

An embodiment of this application further provides a chip system, where the system chip is used in an electronic device. The chip system includes at least one processor and at least one interface circuit. The processor and the interface circuit may be interconnected through a line. For example, the interface circuit may receive a signal from another apparatus (such as a memory). For another example, the interface circuit may be configured to send a signal to another apparatus (for example, a processor). For example, the interface circuit may read instructions stored in the memory and send the instructions to the processor. When the instructions are executed by the processor, the electronic device may be enabled to perform the steps in the foregoing embodiments. Certainly, the chip system may further include another discrete component. This is not specifically limited in this embodiment of this application.

An embodiment of this application further provides a computer-readable storage medium. The computer storage medium includes computer instructions. When the computer instructions are run on the foregoing electronic device, the electronic device is enabled to perform the functions or steps in the foregoing method embodiments.

An embodiment of this application further provides a computer program product. When the computer program product runs on a computer, the computer is enabled to perform the functions or steps in the foregoing method embodiments. For example, the computer may be the foregoing electronic device.

Based on the descriptions of the foregoing implementations, a person skilled in the art may clearly understand that, for a purpose of convenient and brief description, division into the foregoing functional modules is used as an example for illustration. In actual application, the foregoing functions may be allocated to different functional modules and completed based on requirements. In other words, an inner structure of an apparatus is divided into different functional modules to complete all or some of the functions described above.

In the several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be reflected in a form of a software product. The software product is stored in a storage medium and includes several instructions for enabling a device (which may be a single-chip microcomputer, a chip, or the like) or a processor (processor) to perform all or some of steps of methods in embodiments of this application. The foregoing storage medium includes any medium that can store program code, such as a USB flash drive, a removable hard disk, a read only memory (read only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A video production method, applied to an electronic device, wherein the method comprises:
displaying a dialog page of a voice assistant application, wherein the dialog page comprises a video generation prompt box, the prompt box comprises at least one image set item and a video generation control, the at least one image set item is used to provide at least one image, and the video generation control is used to generate a video;
in response to a user operation of a user on the video generation control, generating a first video based on the at least one image, and displaying a preview prompt window of the first video in the dialog page of the voice assistant application;
displaying a video add card in the dialog page, wherein the video add card comprises a first control;
if a user operation of the user on the first control is received, displaying a text edit window in the dialog page in response to the user operation of the user on the first control;
obtaining text content in the text edit window; and
generating a second video based on the text content and the first video, and displaying a preview prompt window of the second video in the dialog page.

2. The method according to claim 1, wherein the text edit window comprises a recommendation, and the recommendation is generated based on a video theme of the first video.

3. The method according to claim 2, wherein the text edit window further comprises a change option, and the method further comprises:
updating the recommendation in the text edit window in response to a user operation of the user on the change option.

4. The method according to claim 2 or 3, wherein the method further comprises:
changing the recommendation in response to an edit operation of the user on the recommendation in the text edit window, to obtain changed text content; and
obtaining the changed text content in the text edit window.

5. The method according to any one of claims 1 to 4, wherein generating the second video based on the text content and the first video comprises:
obtaining a first production template, wherein the first production template is used to provide a display style of a video;
synthesizing the first production template and the text content, to generate a third video, wherein the third video comprises the text content; and
synthesizing the third video and the first video, to generate the second video.

6. The method according to any one of claims 1 to 5, wherein the video add card further comprises a second control, and the method further comprises:
if a user operation of the user on the second control is received, displaying an audio input window in the dialog page in response to the user operation of the user on the second control, wherein the audio input window is used to provide a recording function, and the audio input window comprises a recording function key;
obtaining audio content in response to a user operation of the user on the recording function key; and
generating a fourth video based on the audio content and the first video, and displaying a preview prompt window of the fourth video in the dialog page.

7. The method according to claim 6, wherein the audio input window further comprises a text conversion area, and the text conversion area is used to provide text corresponding to the audio content.

8. The method according to claim 6 or 7, wherein generating the fourth video based on the audio content and the first video comprises:
obtaining a second production template;
synthesizing the audio content and the second production template, to generate a fifth video, wherein the fifth video comprises the audio content and the text corresponding to the audio content; and
synthesizing the fifth video and the first video, to generate the fourth video.

9. The method according to any one of claims 1 to 8, wherein the video add card further comprises a third control, and the method further comprises:
if a user operation of the user on the third control is received, displaying a video shooting window in response to the user operation of the user on the third control, wherein the video shooting window is used to provide a video shooting function, and the video shooting window comprises a shooting function key;
obtaining video content in response to a user operation of the user on the shooting function key; and
generating a sixth video based on the video content and the first video, and displaying a preview prompt window of the sixth video in the dialog page.

10. The method according to claim 9, wherein the video content comprises text corresponding to video data, and obtaining the video content in response to the user operation of the user on the shooting function key comprises:
recording the video content in response to the user operation of the user on the shooting function key;
displaying a video preview page of the video content after the video content is shot, wherein the video preview page comprises a completion function key; and
obtaining the video content in response to a user operation of the user on the completion function key.

11. The method according to any one of claims 1 to 10, wherein the electronic device records at least one reminder event, the reminder event comprises an event date and an event theme, and the method further comprises:
providing a video production recommendation card in a desktop interface within preset duration before an event date of the reminder event, wherein the recommendation card is used to provide a quick entry to the dialog page.

12. The method according to claim 11, wherein the reminder event is any one of a birthday event, an anniversary event, and a festival event.

13. The method according to claim 11 or 12, wherein displaying the dialog page of the voice assistant application comprises:
entering the dialog page of the voice assistant application in response to a user operation of the user on the recommendation card or a received voice instruction, wherein the at least one image set item is associated with the event theme, and the event theme is carried in the recommendation card or the voice instruction.

14. An electronic device, comprising a memory and one or more processors, wherein the memory is coupled to the processor, and
the memory stores computer program code, the computer program code comprises computer instructions, and when the computer instructions are executed by the processor, the electronic device is enabled to perform the method according to any one of claims 1 to 13.

15. A computer-readable storage medium, comprising computer instructions, wherein when the computer instructions run on an electronic device, the electronic device is enabled to perform the method according to any one of claims 1 to 13.
